# EUROPEAN PATENT APPLICATION

(11) **EP 1 227 111 A1**
(43) Date of publication of application: **31.07.2002**
(21) Application number: 00946441.3
(22) Date of filing: 21.07.2000
(51) Int. Cl.: C08F 8/42, C08F 30/06, A01N 55/08, C09D 5/16, C09D 143/00, C02F 1/50

(54) **TRIPHENYLBORON-CONTAINING POLYMERS AND USE THEREOF**

(30) Priority: 21.07.1999 JP 20679999; 17.03.2000 JP 2000076939; 22.03.2000 JP 2000080153
(71) Applicant: Yoshitomi Fine Chemicals, Ltd., Osaka-shi, Osaka 541-0046 (JP)
(72) Inventor: YOSHIMARU, Masaaki Yoshitomi Fine Chemicals, Ltd., Chikujo-gun Fukuoka 871-8550 (JP); KOHARA, Masanori Yoshitomi Fine Chemicals, Ltd., Chikujo-gun Fukuoka 871-8550 (JP); SHIBUYA, Yoshifumi Yoshitomi Fine Chemicals, Ltd., Osaka-shi Osaka 541-0046 (JP)
(74) Representative: Weber, Thomas, Dr.Dipl.-Chem.
(86) International application number: JP0004888
(87) International publication number: WO0105848

(57) **Abstract**

A polymer containing a triphenylboron-containing constituting unit of the formula [I]: 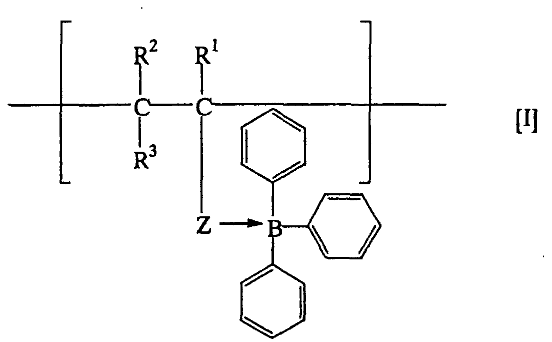 wherein each symbol is as defined in the specification, shows a superior adhesion-preventive effect against aquatic fouling organisms, such as coelenterates, shellfish, tubicolous polychaetes and the like, for a long time, shows a function of not only an active ingredient but also a binder, the polymer characteristically shows fine miscibility with other coating resins and a less adverse influence on the environment. Therefore, it can be used as a superior preventive of fouling due to the adhesion of aquatic fouling organisms.

## Description

### Technical Field

The present invention relates to a polymer containing triphenylboron and use thereof. More particularly, this invention relates to a preventive of fouling due to adhesion of aquatic fouling organisms (hereinafter to be also referred to as a fouling preventive), such as an antifouling agent for a fishnet, that prevents aquatic fouling organisms from adhering to and growing on culture and fixed fishnets, an underwater antifouling coating (e.g., ship bottom antifouling coating) that prevents aquatic fouling organisms from adhering to and growing on the bottom of a ship, a material used for a fishnet (e.g., buoy and rope), and condenser water channels of a nuclear energy or thermal power plant, and the like.

### Background Art

When aquatic organisms such as coelenterates (e.g., hydrozoas, obelia etc.), shellfish, tubicolous polychaetes, algae, Polyzoa, Mollusca and the like adhere to the bottom of a ship, culture and fixed fishnets and the like, they cause a great economic loss to the ship and fishnets. Therefore, these aquatic organisms are called aquatic fouling organisms. For example, when barnacle and the like adhere to fishnets, the gaps are filled up. This may decrease oxygen in water by blocking the flow of tide, causing death of cultured fish from suffocation, or increase wave resistance, causing breakage and the like of the net when typhoon comes.

When these aquatic fouling organisms adhere to the ship bottom, the driving efficiency of the ship is decreased and fuel efficiency is decreased, which in turn results in economic loss. In an attempt to decrease the economic loss caused by the fouling organisms, therefore, great labor and cost have been expensed for the maintenance of objects susceptible to fouling, as the situation stands.

Various researches and suggestions have been heretofore made to prevent adhesion of aquatic fouling organisms. From the practical viewpoint, use of a series of organic tin compounds is effective. However, the organic tin compounds generally have strong toxicity to the extent that careless handling of products containing them can result in hazardous influence on the operator and that the environment may be contaminated.

These difficulties have produced the demand for a low-pollution preventive of fouling due to adhesion of aquatic fouling organisms, or an antifouling preventive, such as a low-pollution antifouling agent for a fishnet and a low-pollution underwater antifouling coating (e.g., ship bottom antifouling coating etc.). For example, JP-B-10849/1976 discloses an underwater antifouling coating containing a benzothiazole compound as an active ingredient; JP-A-38306/1985, JP-A-284275/1988 and JP-B-11606/1989 disclose various antifouling agents for fishnet and antifouling coating compositions, wherein a tetraalkyl thiuram disulfide compound and other compounds are combined; JP-B-50984/1986 discloses an anticontaminant agent for marine structures, which comprises a 3-isothiazolone compound as an active ingredient; and JP-B-20665/1989 and JP-B-24242/1990, and JP-A-9320/1978, JP-A-201804/1993, JP-A-100405/1994 and JP-A-100408/1994 disclose underwater antifouling coatings containing a maleimide compound as an active ingredient.

However, all of these antifouling agents only have a weak adhesion-preventive effect against coelenterates, such as hydrozoas, obelia and the like, and could not be used in a sea area where coelenterates live, such as the coasts of Tohoku region and Hokkaido. In Tokai and West Japan sea areas where lots of shellfish (e.g., barnacle, mussel etc.) and tubicolous polychaetes (e.g., *Hydroides norvegica* etc.) live, moreover, the conventional antifouling agents show weak adhesion preventive effects and cannot effectively prevent adhesion of these aquatic fouling organisms.

It is conventionally known that cuprous oxide is effective against shellfish, and organic copper type antifouling agents (e.g., copper pyrithion etc.) have been confirmed to be effective against shellfish and tubicolous polychaetes. However, cuprous oxide only shows a weak adhesion preventive effect against shellfish and tubicolous polychaetes. In addition, an organic copper group antifouling agent often thickens or gelates a coating upon mixing with the coating, thereby posing a defect that mixing with a coating is difficult.

In addition, JP-A-8-295608 discloses a fishnet antifouling agent containing a triphenylboron alkylamine adduct compound as an active ingredient, JP-A-8-295609 discloses a solution containing a triphenylboron octadecylamine adduct compound, and WO98/33892 discloses a triphenylboron-containing allylamine type polymer. However, sustained release of the active ingredient is difficult, and an antifouling effect cannot be maintained over a long time. Moreover, JP-A-11-199801 discloses a triarylboron-containing polymer and JP-A-11-302571 discloses a resin bonded with a trisubstituted boron-containing-amine complex.

The present invention aims at solving the above-mentioned defects and providing an antifouling component exhibiting a superior adhesion-preventive effect against aquatic fouling organisms such as coelenterates, shellfish, tubicolous polychaetes and the like and a fouling preventive containing this component, which is capable of retaining the effect for a long time.

The present invention also aims at providing an antifouling component superior in miscibility with other antifouling components, coating resins and the like, having a binder function and causing less adverse influence on the environment, and a fouling preventive containing this component.

### Disclosure of the Invention

The present inventors have made intensive studies with the purpose of overcoming the above-mentioned various defects found in conventional fouling preventives, such as fishnet antifouling agent, underwater antifouling coating and the like, and invented a novel polymer containing triphenylboron and a fouling preventive containing the same, that are associated with less possibility of environmental pollution, and show superior adhesion-preventive effects against aquatic fouling organisms for a long time. That is, the present inventors have found that a novel triphenylboron-containing polymer shows a superior adhesion-preventive effect for a long time against coelenterates such as hydrozoas, obelia etc., shellfish such as barnacle, blue mussel, oyster, Serpula etc., tubicolous polychaetes such as *Hydroides norvegica, Serpula vermicularis, Pomatoleios kraussii, Dexiospira spirillum* etc., and other aquatic fouling organisms, which resulted in the completion of the present invention. Particularly, a polymer having a triphenylboron-containing constituting unit of the formula (3) below can afford a polymer having self-abrasive property and capable of exhibiting an antifouling effect for a long time, by copolymerization with a (meth)acrylic acid metal salt, rather than homopolymerization of triphenylboron-containing constituting units.

The polymer containing triphenylboron of the present invention has a triphenylboron-containing constituting unit, and has, in the same molecule, a resin moiety having a coating film-forming capability. Therefore, it can function not only as an active ingredient but also as a binder, and shows fine miscibility with other coating resin and less adverse influence on the environment.

### Brief Description of the Drawing

Fig. 1 shows an IR (infrared) spectrum of a polymer obtained in Example 5.

Fig. 2 shows an IR (infrared) spectrum of a polymer obtained in Example 45.

### Embodiment of the Invention

The present invention relates to a polymer containing a triphenylboron-containing constituting unit of the formula [I]: 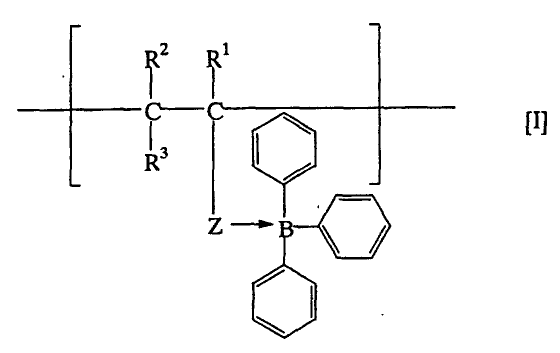 wherein R¹, R² and R³ are the same or different and each is hydrogen atom or alkyl group having 1 to 4 carbon atoms;
Z is a group of the formula (1a): 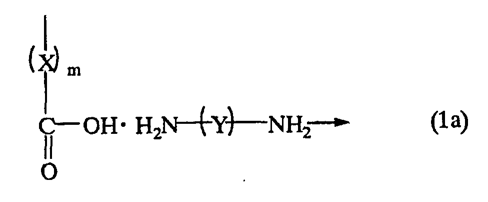 , the formula (2a): 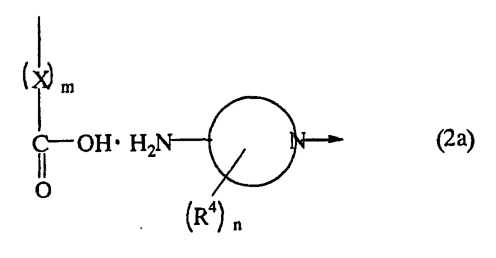 or the formula (3a): 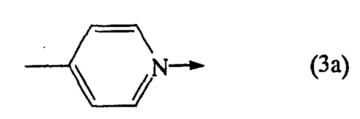 wherein, in the formulas (1a) and (2a), X is alkylene group having 1 to 18 carbon atoms, arylene group, aralkylene group, -C(=O)- group, -C(=O)-R⁵- group, -C(=O)-O-R⁵- group, -O-R⁵-group, -C(=O)-O-R⁵-O-C(=O)- group or -C(=O)-O-R⁵-O-C(=O)-R⁶-group (where R⁵ and R⁶ are the same or different and each is alkylene group having 1 to 18 carbon atoms or arylene group); Y is alkylene group having 2 to 18 carbon atoms, arylene group, aralkylene group or cycloalkylene group; m is 0 or 1; R⁴ in the number of n are the same or different and each is halogen atom or alkyl group having 1 to 18 carbon atoms; n is an integer of 0-3; and a group of the formula (2b): 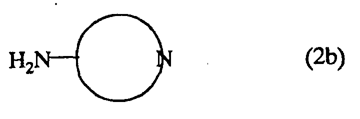 is amino-substituted, N-containing heterocycle, a composition containing the polymer and a fouling preventive containing the polymer.

The present invention is explained in detail in the following.

The alkyl group having 1 to 4 carbon atoms at R¹, R² and R³ in the formula [I] is exemplified by straight or branched chain alkyl group such as methyl, ethyl, n-propyl, isopropyl, n-butyl, sec-butyl, tert-butyl and the like, with preference given to methyl.

Preferable examples of each of R¹, R² and R³ include hydrogen atom and methyl.

The halogen atom at R⁴ in the formula (2a) is exemplified by chlorine atom, bromine atom, fluorine atom and the like. The alkyl group having 1 to 18 carbon atoms at R⁴ is exemplified by straight or branched chain alkyl group such as methyl, ethyl, n-propyl, isopropyl, n-butyl, sec-butyl, tert-butyl, n-pentyl, n-hexyl, n-heptyl, n-octyl, 2-ethylhexyl, n-dodecyl, n-octadecyl and the like, with preference given to alkyl group having 1 to 4 carbon atoms. As R⁴, hydrogen atom or alkyl group having 1 to 4 carbon atoms is preferable. As n, 0 or 1 is preferable.

The alkylene group having 1 to 18 carbon atoms at X in the formulas (1a) and (2a) is exemplified by straight or branched chain alkylene group such as methylene, ethylene, trimethylene, propylene, tetramethylene, 3-methyltetramethylene, octamethylene, dodecamethylene, octadecamethylene and the like, with preference given to alkylene group having 1 to 4 carbon atoms.

The arylene group at X in the formulas (1a) and (2a) is exemplified by o-phenylene, m-phenylene, p-phenylene, 1,8-naphthylene, 1,7-naphthylene, 1,6-naphthylene, 1,4-naphthylene, 1,3-naphthylene, 1,2-naphthylene, 2,3-naphthylene, 2,6-naphthylene, 2,7-naphthylene and the like, with preference given to p-phenylene.

The aralkylene group at X in the formulas (1a) and (2a) is exemplified by -Ar-Alk- or -Alk-Ar- where Ar is arylene group and Alk is alkylene group, such as benzylene (-C₆H₄-CH₂-or -CH₂-C₆H₄-), phenethylene (-C₆H₄-C₂H₅- or -C₂H₅-C₆H₄-) and the like, with preference given to benzylene.

The alkylene group having 1 to 18 carbon atoms at R⁵ and R⁶ of -C(=O)-R⁵- group, -C(=O)-O-R⁵- group, -O-R⁵- group, -C(=O)-O-R⁵-O-C(=O)- group or -C(=O)-O-R⁵-O-C(-O)-R⁶- group for X in the formulas (1a) and (2a) is exemplified by straight or branched chain alkylene group such as methylene, ethylene, trimethylene, propylene, tetramethylene, 2-methyltetramethylene, 3-methyltetramethylene, octamethylene, dodecamethylene, octadecamethylene and the like, with preference given to alkylene group having 1 to 4 carbon atoms.

The arylene group at R⁵ and R⁶ of -C(=O)-R⁵- group, -C(=O)-O-R⁵- group, -O-R⁵- group, -C(=O)-O-R⁵-O-C(=O)- group or -C(=O)-O-R⁵-O-C(=O)-R⁶- group for X in the formulas (1a) and (2a) is exemplified by o-phenylene, m-phenylene, p-phenylene, 1,8-naphthylene, 1,7-naphthylene, 1,6-naphthylene, 1,4-naphthylene, 1,3-naphthylene, 1,2-naphthylene, 2,3-naphthylene, 2,6-naphthylene, 2,7-naphthylene and the like, with preference given to p-phenylene.

The X in the formulas (1a) and (2a) may be void (m=0) or preferable alkylene group having 1 to 4 carbon atoms.

The alkylene group having 2 to 18 carbon atoms at Y in the formula (1a) is exemplified by alkylene such as ethylene, trimethylene, propylene, tetramethylene, pentamethylene, hexamethylene, octamethylene, dodecamethylene, octadecamethylene and the like, with preference given to ethylene and propylene.

The arylene group at Y in the formula (1a) is exemplified by o-phenylene, m-phenylene, p-phenylene, 1,8-naphthylene, 1,7-naphthylene, 1,6-naphthylene, 1,4-naphthylene, 1,3-naphthylene, 1,2-naphthylene, 2,3-naphthylene, 2,6-naphthylene, 2,7-naphthylene and the like, with preference given to p-phenylene.

The aralkylene group at Y in the formula (1a) is exemplified by -Ar-Alk- or -Alk-Ar- where Ar is arylene group and Alk is alkylene group, such as benzylene (-C₆H₄-CH₂- or -CH₂-C₆H₄-), phenethylene (-C₆H₄-C₂H₅- or -C₂H₅-C₆H₄-) and the like, with preference given to benzylene.

The cycloalkylene group at Y in the formula (1a) preferably has 3-10 carbon atoms, such as cyclopropylene, cyclobutylene, cyclohexylene, cyclooctylene, cyclodecylene and the like, with preference given to cyclohexylene.

The Y in the formula (1a) is preferably ethylene, propylene or p-phenylene.

The N-containing heterocycle of the amino-substituted, N-containing heterocycle in the formula (2b) may be a monoheterocycle or condensed heterocycle, or saturated heterocycle or unsaturated heterocycle, or may contain sulfur atom or oxygen atom. Preferably, it is a 5 or 6-membered ring or a condensed ring containing the same, such as pyridine ring, pyrimidine ring, pyrrole ring, pyrazole ring, pyrrolidine ring, pyrazoline ring, piperidine ring, piperazine ring, pyrazine ring, purine ring, imidazole ring, benzoimidazole ring, indole ring, indazole ring, triazole ring, carbazole ring, phenothiazine ring, phenoxazine ring, quinoline ring and the like, with preference given to pyridine ring and piperidine ring.

The alkyl group having 1 to 4 carbon atoms at R⁷ in the formula (4) is exemplified by straight or branched chain alkyl group such as methyl, ethyl, n-propyl, isopropyl, n-butyl, sec-butyl, tert-butyl and the like, with preference given to methyl. As R⁷, hydrogen atom and methyl are preferable.

The organic acid residue at R⁸, R⁹ and R¹⁰ in the formula (4) refers to the residue of carboxyl of organic acid after eliminating hydrogen atom, wherein the organic acid is exemplified by optinoally substituted saturated and unsaturated aliphatic carboxylic acid having 1 to 18 carbon atoms such as acrylic acid, methacrylic acid, propionic acid, octyl acid, versatic acid, stearic acid, isostearic acid, palmitic acid, monochloroacetic acid, monofluoroacetic acid and the like; optionally substituted aromatic carboxylic acid such as benzoic acid, α-naphthoic acid, β-naphthoic acid, nitrobenzoic acid, nitronaphthalenecarboxylic acid, salicylic acid, cresotinic acid and the like; optionally substituted aromatic aliphatic carboxylic acid such as 2,4-dichlorophenoxyacetic acid, 2,4,5-trichlorophenoxyacetic acid and the like; heterocyclecarboxylic acid such as quinolinecarboxylic acid and the like; pyruvic acid and the like.

The alkyl group having 1 to 18 carbon atoms at R⁸, R⁹ and R¹⁰ in the formula (4) is exemplified by straight or branched chain alkyl group such as methyl, ethyl, n-propyl, isopropyl, n-butyl, isobutyl, sec-butyl, tert-butyl, hexyl, octyl, 2-ethylhexyl, dodecyl, octadecyl and the like.

The aryl group at R⁸, R⁹ and R¹⁰ in the formula (4) is exemplified by phenyl, naphthyl and the like.

The cycloalkyl group at R⁸, R⁹ and R¹⁰ in the formula (4) is exemplified by those having 3 to 10 carbon atoms, such as cyclopropyl, cyclohexyl, cyclooctyl, cyclodecyl and the like.

The metal atom at M in the formula (4) is exemplified by Cu, Zn, Fe, Ni, Co, Pb, Al, Mg and the like, with preference given to Cu, Zn and Mg.

When M is a metal atom, R⁸, R⁹ and R¹⁰ are preferably aliphatic carboxylic acid residue having 1 to 18 carbon atoms, and when M is a silicon atom, R⁸, R⁹ and R¹⁰ are preferably alkyl group having 1 to 4 carbon atoms.

As the polymer containing triphenylboron of the present invention, there is mentioned a polymer containing a triphenylboron-containing constituting unit of the following the formula (1): 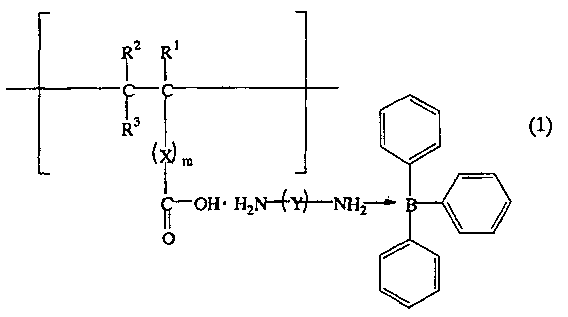 , the formula (2): 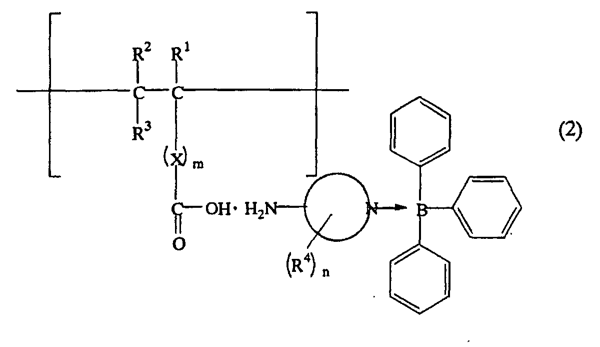 or the formula (3): 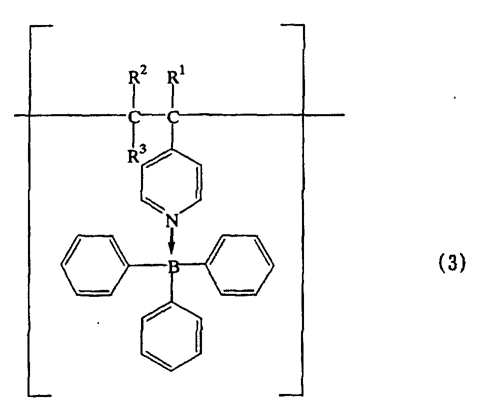 wherein each symbol in the formulas (1)-(3) is as defined above.

### Polymer containing triphenylboron (1)

In the polymer containing a triphenylboron-containing constituting unit of the formula (1) (hereinafter to be also referred to as a polymer containing triphenylboron (1)) of the present invention, triphenylboron-containing constituting unit of the formula (1) consists of a carboxyl group-containing constituting unit of the formula (5): 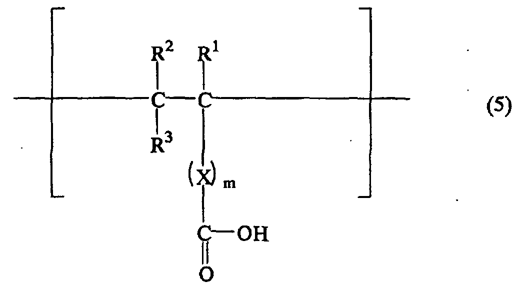 wherein each symbol is as defined above, and a diamine adduct of triphenylboron of the formula (6): 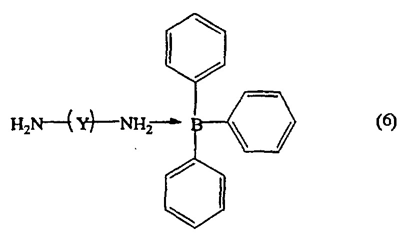 wherein each symbol is as defined above.

The carboxyl group-containing constituting unit of the formula (5) is exemplified by constituting units derived from carboxyl group-containing polymerizable unsaturated monomer, such as acrylic acid, crotonic acid, isocrotonic acid, vinylacetic acid, methacrylic acid, 2-ethylacrylic acid, 2-n-propylacrylic acid, 2-isopropylacrylic acid, 2-n-butylacrylic acid, 2-sec-butylacrylic acid, 2-tert-butylacrylic acid, 2-ethyl-2-butenoic acid, 2-n-propyl-2-butenoic acid, 2-isopropyl-2-butenoic acid, 2-n-butyl-2-butenoic acid, 2-sec-butyl-2-butenoic acid, 2-tert-butyl-2-butenoic acid, 2-pentenoic acid, 2-methyl-2-pentenoic acid, 3-methyl-2-pentenoic acid, 4-methyl-2-pentenoic acid, 2-ethyl-2-pentenoic acid, 2-n-propyl-2-pentenoic acid, 2-isopropyl-2-pentenoic acid, 2-n-butyl-2-pentenoic acid, 2-sec-butyl-2-pentenoic acid, 2-tert-butyl-2-pentenoic acid, 3-pentenoic acid, 4-methyl-3-pentenoic acid, 2-hexenoic acid, 2-methyl-2-hexenoic acid, 2-ethyl-2-hexenoic acid, 2-n-propyl-2-hexenoic acid, 2-isopropyl-2-hexenoic acid, 2-n-butyl-2-hexenoic acid, 2-sec-butyl-2-hexenoic acid, 2-tert-butyl-2-hexenoic acid, 3-hexenoic acid, 4-hexenoic acid, 5-hexenoic acid, 2-heptenoic acid, 2-methyl-2-heptenoic acid, 2-ethyl-2-heptenoic acid, 2-n-propyl-2-heptenoic acid, 2-isopropyl-2-heptenoic acid, 2-n-butyl-2-heptenoic acid, 2-sec-butyl-2-heptenoic acid, 2-tert-butyl-2-heptenoic acid, 3-heptenoic acid, 4-heptenoic acid, 5-heptenoic acid, 6-heptenoic acid, 4-methyl-2-hexenoic acid, 5-methyl-2-hexenoic acid, 4,4-dimethyl-2-penten acid, 2,4-dimethyl-2-pentenoic acid, 2,4-dimethyl-2-hexenoic acid, 2,5-dimethyl-2-hexenoic acid, 2,4,4-trimethyl-2-pentenoic acid, 3-methyl-2-butenoic acid, 2,3-dimethyl-2-butenoic acid, 3-methyl-2-pentenoic acid, 2,3-dimethyl-2-pentenoic acid, 3-methyl-2-hexenoic acid, 2,3-dimethyl-2-hexenoic acid, 3,4-dimethyl-2-pentenoic acid, 2,3,4-trimethyl-2-pentenoic acid, 3-methyl-2-heptenoic acid, 2,3-dimethyl-2-heptenoic acid, 3,4-dimethyl-2-hexenoic acid, 2,3,4-trimethyl-2-hexenoic acid, 3,5-dimethyl-2-hexenoic acid, 2,3,5-trimethyl-2-hexenoic acid, 3,4,4-trimethyl-2-pentenoic acid, 2,3,4,4-tetramethyl-2-pentenoic acid, 7-octenoic acid, 11-dodecenoic acid, 15-hexadecenoic acid, 17-octadecenoic acid, 2-methyl-3-butenoic acid, 2-methyl-4-pentenoic acid, 2-methyl-5-hexenoic acid, 2-methyl-6-heptenoic acid, 2-methyl-7-octenoic acid, 2-methyl-11-dodecenoic acid, 2-methyl-15-hexadecenoic acid, 2-methyl-17-octadecenoic acid, 4-vinylbenzoic acid, 4-(1-propenyl)benzoic acid, 4-(isopropenyl)benzoic acid, 4-(1-methyl-1-propenyl)benzoic acid, 4-(2-methyl-1-propenyl)benzoic acid, 4-vinylphenylacetic acid, 4-(1-propenyl)phenylacetic acid, 4-(isopropenyl)phenylacetic acid, 4-(1-methyl-1-propenyl)phenylacetic acid, 4-(2-methyl-1-propenyl)phenylacetic acid, 2-oxo-3-butenoic acid, 3-oxo-4-pentenoic acid, 4-oxo-5-hexenoic acid, carboxymethyl acrylate, 2-carboxyethyl acrylate, 3-carboxypropyl acrylate, 4-carboxybutyl acrylate, 5-carboxypentyl acrylate, 6-carboxyhexyl acrylate, 7-carboxyheptyl acrylate, 8-carboxyoctyl acrylate, 12-carboxydodecyl acrylate, 18-carboxyoctadecyl acrylate, o-carboxyphenyl acrylate, m-carboxyphenyl acrylate, p-carboxyphenyl acrylate, 2-vinyloxyacetic acid, 3-vinyloxypropionic acid, monoacryloyloxymethyl oxalate, mono-3-acryloyloxypropyl oxalate, monoacryloyloxymethyl malonate, mono-3-acryloyloxypropyl malonate and the like, with preference given to constituting unit derived from acrylic acid and methacrylic acid. These constituting units may be contained solely or in combination of two or more kinds thereof in a polymer.

The diamine of the formula (7) below of the diamine adduct of triphenylboron expressed by the formula (6) is exemplified by alkylenediamines having 2 to 18 carbon atoms, such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, octamethylenediamine, dodecamethylenediamine, octadecamethylenediamine and the like; arylenediamines such as phenylenediamines (e.g., m-phenylenediamine, p-phenylenediamine etc.), naphthylenediamines (e.g., 1,4-diaminonaphthalene, 1,5-diaminonaphthalene etc.), and the like; aminoaralkylamines such as aminobenzylamines (e.g., 3-aminobenzylamine, 4-aminobenzylamine etc.), aminophenethylamines (e.g., 3-aminophenethylamine, 4-aminophenethylamine etc.), and the like; diaminocycloalkanes such as 1,3-diaminocyclohexane, 1,4-diaminocyclohexane and the like; and the like, with preference given to ethylenediamine, propylenediamine and p-phenylenediamine.

The polymer containing triphenylboron (1) of the present invention can be synthesized by, for example, the following method. 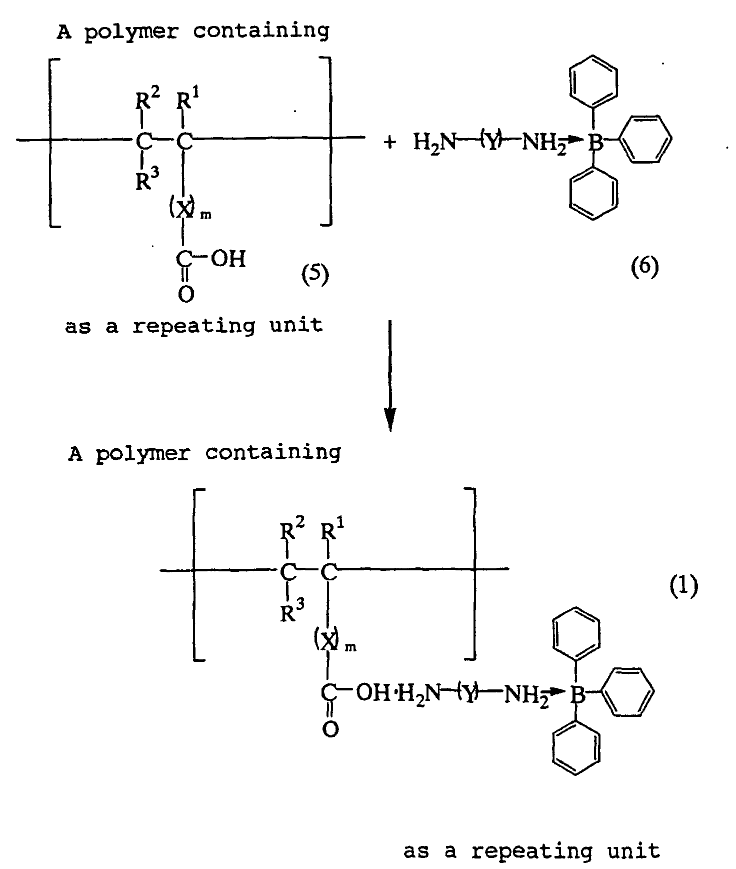 wherein each symbol is as defined above.

That is, the polymer containing triphenylboron (1) can be obtained by adding dropwise a diamine adduct of triphenylboron of the formula (6) or a solution thereof to a solution of polymer containing a carboxyl group-containing constituting unit of the formula (5) (hereinafter this polymer is sometimes to be referred to as a carboxyl group-containing polymer) to allow reaction and removing the solvent by distilling away under reduced pressure.

In the above-mentioned method, the diamine adduct of triphenylboron of the formula (6) is preferably used in an amount of 0.1-3.0 equivalents, more preferably 0.5-2.0 equivalents, to the carboxyl group of the polymer containing the carboxyl group-containing constituting unit of the formula (5). When this amount of use is less than 0.1 equivalent, adhesion of aquatic fouling organisms may not be prevented effectively due to the insufficient content of triphenylboron. Conversely, when it exceeds 3.0 equivalents, unreacted diamine adduct of triphenylboron remains excessively and the prevention of adhesion is no longer efficient even if increase in addition efficiency is taken into consideration.

The solvent to be used in the above-mentioned method is not particularly limited as long as it does not affect the reaction adversely. For example, xylene, n-butanol, toluene, chloroform, propylene glycol monomethyl ether and the like are mentioned, which may be used alone or in combination of two or more kinds thereof.

The temperature of reaction between diamine adduct of triphenylboron of the formula (6) and a polymer containing a carboxyl group-containing constituting unit of the formula (5) is generally room temperature, and can be changed to 100°C as necessary. The reaction time is generally from about 30 minutes to 24 hours.

The polymer containing a carboxyl group-containing constituting unit of the formula (5) is obtained by polymerizing a polymerizable unsaturated monomer including the above-mentioned carboxyl group-containing polymerizable unsaturated monomer by a conventionally-known method.

The diamine adduct of triphenylboron of the formula (6) can be synthesized by, for example, the method shown by the following formulas. 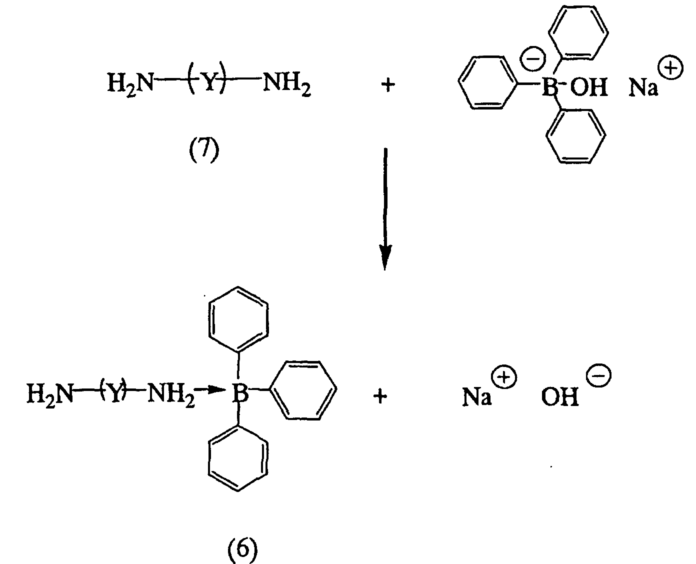 wherein each symbol is as defined above

That is, the diamine adduct of triphenylboron of the formula (6) can be obtained by adding dropwise diamine of the formula (7) to an aqueous solution of a sodium hydroxide adduct of triphenylboron, and when the objective substance precipitated as an insoluble material, by collecting the insoluble material by filtration, washing with water and drying, and when the objective substance is dissolved, by partitioning and removing the solvent by distilling away under reduced pressure.

### Polymer containing triphenylboron (2)

The triphenylboron-containing constituting unit of the formula (2) of the polymer containing a triphenylboron-containing constituting unit of the formula (2) (hereinafter to be also referred to as a polymer containing triphenylboron (2)) of the present invention consists of the carboxyl group-containing constituting unit of the above-mentioned formula (5), and an N-containing heterocyclic adduct of triphenylboron of the formula (8): 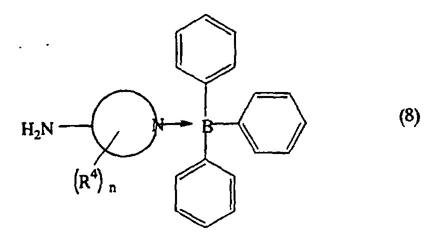 wherein each symbol is as defined above, which is an adduct of triphenylboron and an amino group-substituted, N-containing heterocycle of the formula (9) to be mentioned below.

The amino group-substituted, N-containing heterocycle of the N-containing heterocyclic adduct of triphenylboron of the formula (8) is, for example, 3-aminopyridine, 4-aminopyridine, 4-aminopyrimidine, 5-aminopyrimidine, 3-aminopyrazole, 4-aminopyrazole, 4-aminoimidazole, 4-aminoindazole, 5-aminoindazole, 4-aminoindole, 5-aminoindole, 4-aminobenzoimidazole, 3-aminopyrrolidine, 3-aminopiperidine, 4-aminopiperidine, 3-aminoquinoline, 5-aminoquinoline, 1-aminopiperazine, aminopyrazine, 2-aminopurine, 3-aminopyrrole, 3-aminopyrazoline, 3-amino-1,2,4-triazole, 4-amino-1,2,4-triazole, 4-aminocarbazole, 4-aminophenothiazine, 4-aminophenoxazine and the like, with preference given to 4-aminopyridine and 4-aminopiperidine.

The polymer containing triphenylboron (2) of the present invention can be synthesized by, for example, the following method. 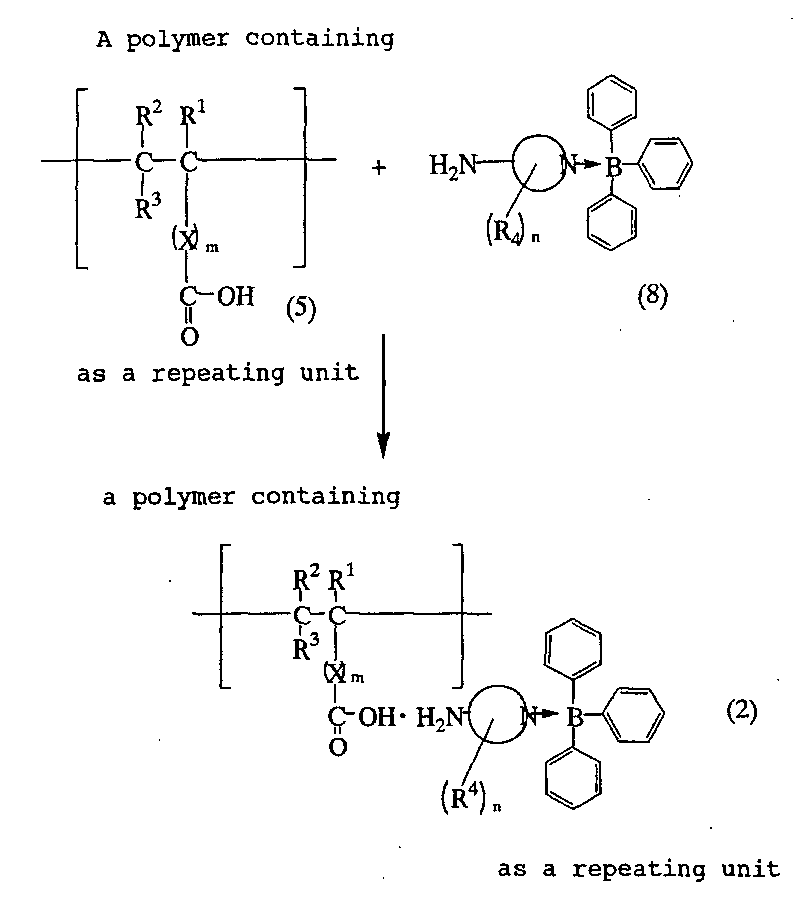 wherein each symbol is as defined above.

That is, the polymer containing triphenylboron (2) can be obtained by adding dropwise an N-containing heterocyclic adduct of triphenylboron of the formula (8) or a solution thereof to a solution of polymer containing a carboxyl group-containing constituting unit of the formula (5) to allow reaction and removing the solvent by distilling away under reduced pressure.

In the above-mentioned method, the N-containing heterocyclic adduct of triphenylboron of the formula (8) is preferably used in an amount of 0.1-3.0 equivalents, more preferably 0.5-2.0 equivalents, to the carboxyl group of the polymer containing the carboxyl group-containing constituting unit of the formula (5). When this amount of use is less than 0.1 equivalent, adhesion of aquatic fouling organisms may not be prevented effectively due to the insufficient content of triphenylboron. Conversely, when it exceeds 3.0 equivalents, unreacted N-containing heterocyclic adduct of triphenylboron remains excessively and the prevention of adhesion is no longer efficient even if increase in addition efficiency is taken into consideration.

The solvent to be used in the above-mentioned method is not particularly limited as long as it does not affect the reaction adversely. For example, xylene, toluene, chloroform, n-butanol, propylene glycol monomethyl ether and the like are mentioned, which may be used alone or in combination of two or more kinds thereof.

The temperature of reaction between N-containing heterocyclic adduct of triphenylboron of the formula (8) and a polymer having a carboxyl group-containing constituting unit of the formula (5) is generally room temperature, and can be changed to 100°C as necessary. The reaction time is generally from about 30 minutes to 24 hours.

The N-containing heterocyclic adduct of triphenylboron of the formula (8) can be synthesized by, for example, the following method: 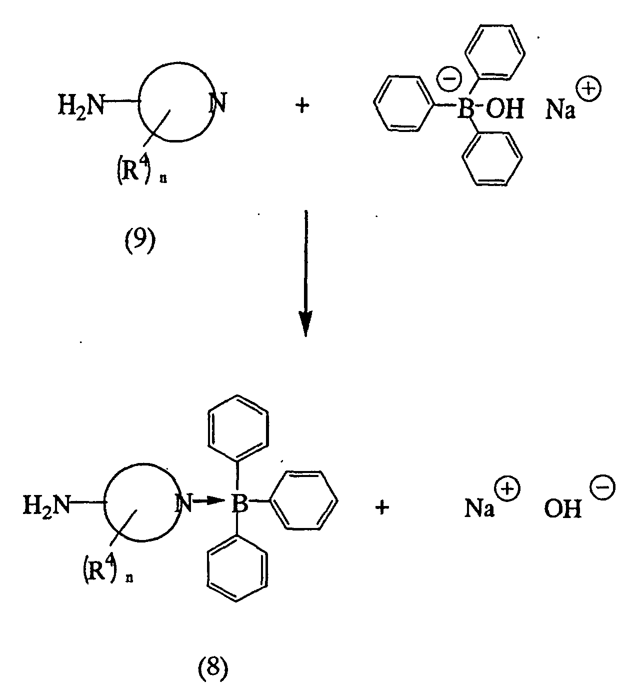 wherein each symbol is as defined above.

That is, N-containing heterocyclic adduct of triphenylboron of the formula (8) is obtained by adding the amino-substituted, N-containing heterocycle of the formula (9) to an aqueous solution of a sodium hydroxide adduct of triphenylboron, and washing with water and drying the precipitated insoluble material.

### Polymer containing triphenylboron (3)

The triphenylboron-containing constituting unit of the formula (3) in the polymer containing a triphenylboron-containing constituting unit of the formula (3) of the present invention (hereinafter to be also referred to as a polymer containing triphenylboron (3)) consists of a constituting unit derived from a vinylpyridine derivative of the formula (10): 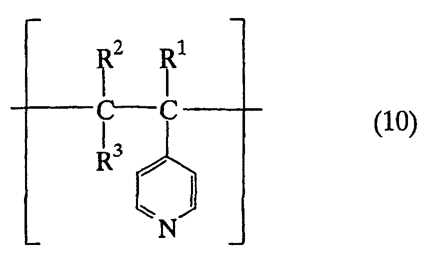 wherein each symbol is as defined above, and triphenylboron.

The vinylpyridine derivative of the constituting unit derived from vinylpyridine derivative of the formula (10) is exemplified by 4-vinylpyridine, 4-(1-methylvinyl)pyridine, 4-(2-methylvinyl)pyridine, 4-(1,2-dimethylvinyl)pyridine, 4-(1-ethylvinyl)pyridine, 4-(2-ethylvinyl)pyridine, 4-(1-butylvinyl)pyridine and the like.

The polymer containing triphenylboron of the present invention (3) can be synthesized by, for example, the following method. 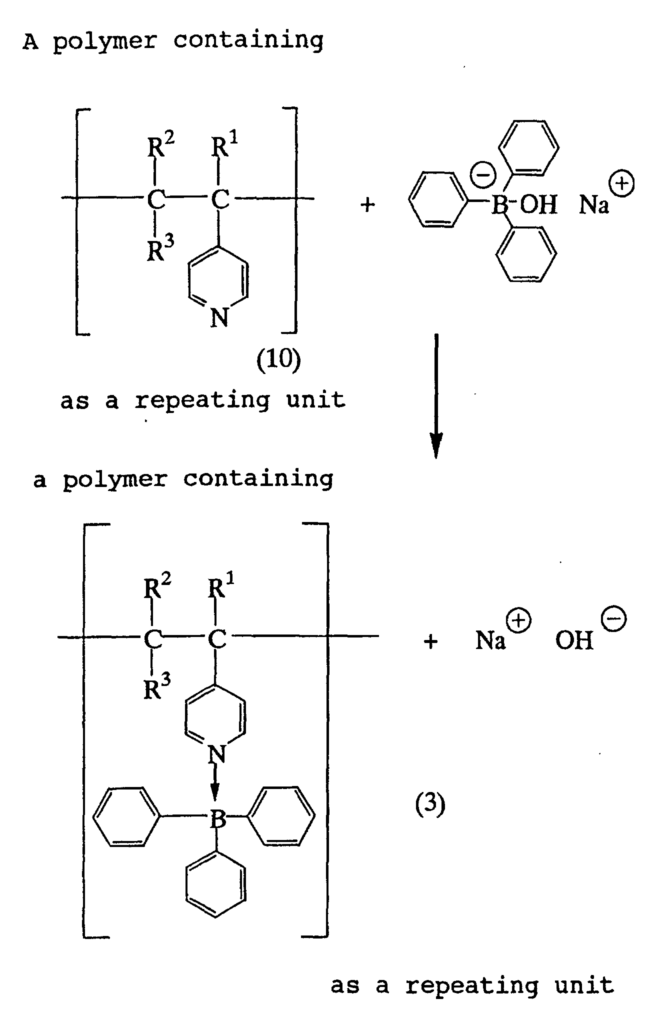 wherein each symbol is as defined above.

That is, the polymer containing triphenylboron (3) can be obtained by adding dropwise an aqueous solution of sodium hydroxide adduct of triphenylboron of the formula (3) to a solution of polymer containing a constituting unit derived from vinylpyridine derivative of the formula (10), and when the objective substance precipitated as an insoluble material, by collecting the insoluble material by filtration, washing with water and drying, and when the objective substance is dissolved, by partitioning and removing the solvent by distilling away under reduced pressure.

In the above-mentioned method, the sodium hydroxide adduct of triphenylboron is preferably used in an amount of 0.1-3.0 equivalents, more preferably 0.5-2.0 equivalents, to the pyridyl group of the polymer containing constituting unit derived from vinylpyridine derivative of the formula (10). When this amount of use is less than 0.1 equivalent, adhesion of aquatic fouling organisms may not be prevented effectively due to the insufficient content of triphenylboron. Conversely, when it exceeds 3.0 equivalents, unreacted sodium hydroxide adduct of triphenylboron remains excessively and the prevention of adhesion is no longer efficient even if increase in addition efficiency is taken into consideration.

In addition, the polymer containing triphenylboron (3) of the present invention can also be synthesized by the following method. 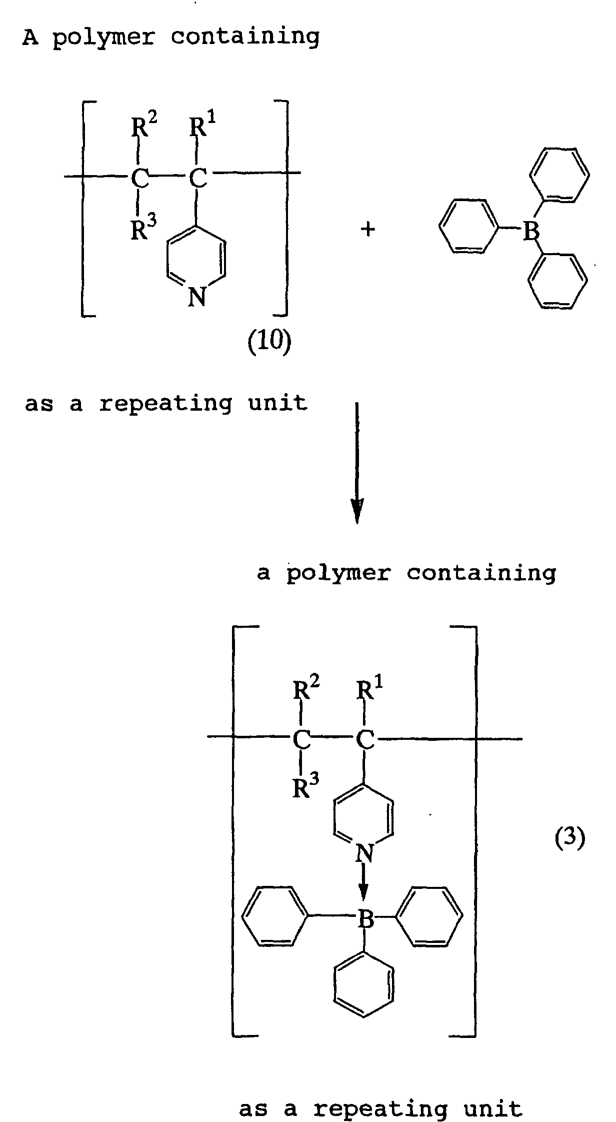 wherein each symbol is as defined above.

That is, the polymer containing triphenylboron (3) can be synthesized by reacting a polymer containing a constituting unit derived from a vinylpyridine derivative of the formula (10) and triphenylboron in an organic solvent such as toluene, xylene, chloroform, dimethylsulfoxide, n-butanol, propylene glycol monomethyl ether and the like.

In the above-mentioned method, triphenylboron is preferably used in an amount of 0.1-3.0 equivalents, more preferably 0.5-2.0 equivalents, to the pyridyl group of the polymer containing a constituting unit derived from a vinylpyridine derivative of the formula (10). When this amount of use is less than 0.1 equivalent, adhesion of aquatic fouling organisms may not be prevented effectively due to the insufficient content of triphenylboron. Conversely, when it exceeds 3.0 equivalents, unreacted triphenylboron remains excessively and the prevention of adhesion is no longer efficient even if increase in addition efficiency is taken into consideration.

The temperature of reaction between a polymer containing a constituting unit derived from a vinylpyridine derivative of the formula (10) and triphenylboron or a sodium hydroxide adduct thereof is generally room temperature, and can be changed to 100°C as necessary. The reaction time is generally from about 30 minutes to 24 hours.

The above-mentioned polymers containing triphenylboron (1)-(3) can be produced by the following method, besides the above-mentioned production method. That is, the above-mentioned polymers containing triphenylboron (1)-(3) can be synthesized by homopolymerization of a triphenylboron-containing vinyl monomer of the formula [I']: 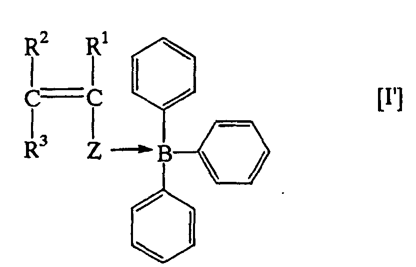 wherein each symbol is as defined above, or copolymerization of this monomer and a different polymerizable unsaturated monomer.

The above-mentioned triphenylboron-containing vinyl monomer of the formula [I'] can be synthesized by the following three methods.

### Method 1:

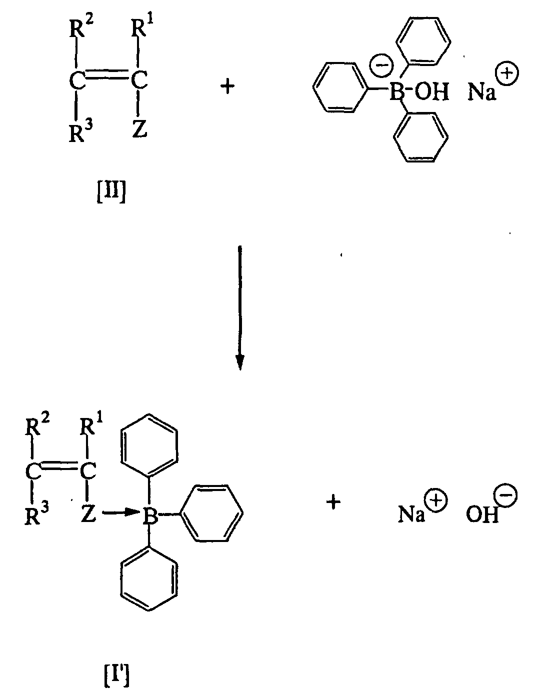

wherein each symbol is as defined above.

The triphenylboron-containing vinyl monomer of the formula [I'] can be obtained by adding dropwise a solution containing vinyl compound of the above-mentioned formula [II] to an aqueous solution of sodium hydroxide adduct of triphenylboron, and when the objective substance precipitated as an insoluble material, by collecting the insoluble material by filtration, washing with water and drying, and when the objective substance is dissolved, by partitioning and removing the solvent by distilling away under reduced pressure.

### Method 2:

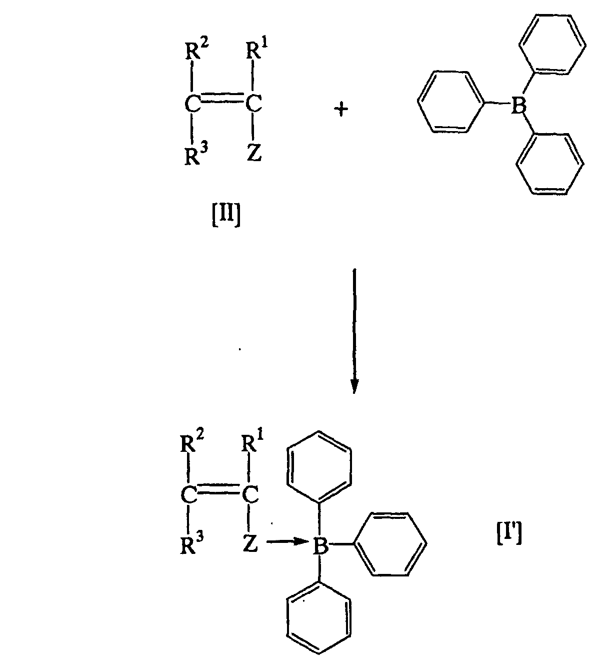

wherein each symbol is as defined above.

The triphenylboron-containing vinyl monomer of the formula [I'] can be obtained by reacting the vinyl compound of the above-mentioned formula [II] and triphenylboron in an organic solvent such as toluene, xylene, chloroform, dimethylsulfoxide, n-butanol, propylene glycol monomethyl ether and the like.

### Method 3 (when substituent Z is a group of the formula (1a) or (1b)):

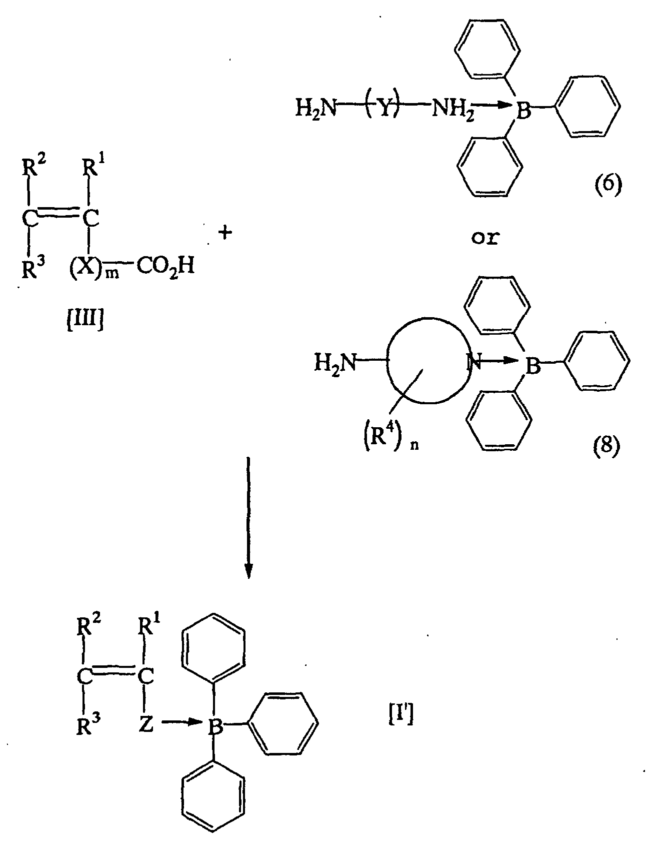

wherein each symbol is as defined above.

The triphenylboron-containing vinyl monomer of the formula [I'] can be obtained by reacting the vinyl compound of the above-mentioned formula [III] and a diamine adduct of triphenylboron of the formula (6) or N-containing heterocyclic adduct of triphenylboron of the formula (8).

The triphenylboron to be used in the present invention may be commercially available or can be produced by reacting boron trifluoride and phenylmagnesium bromide.

The polymers containing triphenylboron (1)-(3) of the present invention have a weight average molecular weight of preferably 1,000-1,000,000, particularly preferably 3,000-500,000. When the molecular weight is less than 1,000, the coating film formed becomes brittle, and conversely, when it exceeds 1,000,000, the polymer solution has a higher viscosity, which unpreferably makes its handling difficult.

The content of the triphenylboron-containing constituting unit of the formula (1), (2) or (3) in the polymer containing triphenylboron (1)-(3) of the present invention is each preferably not less than 1.0 wt%, more preferably 5-95 wt%, particularly preferably 5-70 wt%. When the content is less than 1.0 wt%, the adhesion-preventive effect against aquatic fouling organisms unpreferably becomes insufficient.

The content of the triphenylboron in the polymer containing triphenylboron (1) and (2) of the present invention is each preferably not less than 0.5 wt%, more preferably 3-60 wt%, particularly preferably 3-45 wt%. When the content is less than 0.5 wt%, the adhesion-preventive effect against aquatic fouling organisms unpreferably becomes insufficient.

The content of the triphenylboron in the polymer containing triphenylboron (3) of the present invention is preferably 0.02-70 wt%, more preferably 0.5-70 wt%, most preferably 3-65 wt%, particularly preferably 3-50 wt%. When the content is less than 0.02 wt%, the adhesion-preventive effect against aquatic fouling organisms unpreferably becomes insufficient. It is impossible for the content to exceed 70 wt%.

The polymers containing triphenylboron (1)-(3) of the present invention may contain a constituting unit derived from a polymerizable unsaturated monomer other than the triphenylboron-containing constituting unit of the formula (1), (2) or (3). By containing such constituting unit, the triphenylboron content of the polymers containing triphenylboron (1)-(3) can be adjusted. Therefore, a polymer containing a carboxyl group-containing constituting unit of the formula (5) and a polymer containing a constituting unit derived from a vinylpyridine derivative of the formula (10) may be a homopolymer or a copolymer. The copolymer is obtained by copolymerizing the aforementioned carboxyl group-containing polymerizable unsaturated monomer and a polymerizable unsaturated monomer other than the carboxyl group-containing polymerizable unsaturated monomer or by copolymerizing a vinylpyridine derivative and a polymerizable unsaturated monomer other than the vinylpyridine derivative.

The constituting unit derived from a polymerizable unsaturated monomer other than the triphenylboron-containing constituting unit of the formula (1), (2) or (3) is, for example, a constituting unit derived from a polymerizable unsaturated monomer without boron. Such polymerizable unsaturated monomer is, for example, vinyl hydrocarbons such as ethylene, propylene, butadiene, isoprene, styrene, α-methylstyrene, vinyltoluene, divinylbenzene, indene and the like; acrylonitriles such as acrylonitrile, methacrylonitrile and the like; unsaturated carboxylic acids such as acrylic acid, crotonic acid, isocrotonic acid, methacrylic acid, vinylacetic acid, vinylpropionic acid, vinylbutyric acid, p-vinylbenzoic acid, maleic acid, fumaric acid, itaconic acid, citraconic acid, mesaconic acid and the like; unsaturated carboxylic anhydrides such as maleic anhydride, itaconic anhydride, citraconic anhydride and the like; vinyl heterocyclic compounds such as 2-vinylpyridine, 4-vinylpyridine, N-vinyl-2-pyrrolidone, vinylcarbazole and the like; vinyl esters such as vinyl formate, vinyl acetate, vinyl propionate, vinyl butyrate, vinyl laurate, vinyl palmitate, vinyl stearate, vinyl benzoate and the like; halogenated vinyls such as vinyl chloride, vinylidene chloride and the like; vinylamines; allylamines; vinyl alcohols; allyl alcohols; vinyl ketones such as methyl vinyl ketone, phenyl vinyl ketone and the like; vinyl ethers such as methyl vinyl ether, ethyl vinyl ether, isobutyl vinyl ether, lauryl vinyl ether, phenyl vinyl ether, benzyl vinyl ether and the like; acrylic acid esters such as methyl acrylate, ethyl acrylate, n-propyl acrylate, isopropyl acrylate, n-butyl acrylate, isobutyl acrylate, t-butyl acrylate, 2-ethylhexyl acrylate, lauryl acrylate, cetyl acrylate, stearyl acrylate, vinyl acrylate, benzyl acrylate, phenyl acrylate, isobornyl acrylate, cyclohexyl acrylate, glycidyl acrylate, 2-hydroxyethyl acrylate, 2-hydroxypropyl acrylate, 2-hydroxybutyl acrylate, 4-hydroxybutyl acrylate, glycerol acrylate, butylaminoethyl acrylate, dimethylaminoethyl acrylate, diethylaminoethyl acrylate, dimethylaminopropyl acrylate, dimethylaminobutyl acrylate, dibutylaminoethyl acrylate, 2-methoxyethyl acrylate, 2-ethoxyethyl acrylate, phenoxyethyl acrylate, 2-(2-ethylhexyloxy)ethyl acrylate, 1-methyl-2-methoxyethyl acrylate, 3-methoxybutyl acrylate, 3-methyl-3-methoxybutyl acrylate, o-methoxyphenyl acrylate, m-methoxyphenyl acrylate, p-methoxyphenyl acrylate, o-methoxyphenylethyl acrylate, m-methoxyphenylethyl acrylate, p-methoxyphenylethyl acrylate and the like; methacrylic acid esters such as methyl methacrylate, ethyl methacrylate, n-propyl methacrylate, isopropyl methacrylate, n-butyl methacrylate, isobutyl methacrylate, t-butyl methacrylate, 2-ethylhexyl methacrylate, lauryl methacrylate, cetyl methacrylate, stearyl methacrylate, vinyl methacrylate, benzyl methacrylate, phenyl methacrylate, isobornyl methacrylate, cyclohexyl methacrylate, glycidyl methacrylate, 2-hydroxyethyl methacrylate, 2-hydroxypropyl methacrylate, 2-hydroxybutyl methacrylate, 4-hydroxybutyl methacrylate, glycerol methacrylate, butylaminoethyl methacrylate, dimethylaminoethyl methacrylate, diethylaminoethyl methacrylate, dimethylaminopropyl methacrylate, dimethylaminobutyl methacrylate, dibutylaminoethyl methacrylate, 2-methoxyethyl methacrylate, 2-ethoxyethyl methacrylate, phenoxyethyl methacrylate, 2-(2-ethylhexyloxy)ethyl methacrylate, 1-methyl-2-methoxyethyl methacrylate, 3-methoxybutyl methacrylate, 3-methyl-3-methoxybutyl methacrylate, o-methoxyphenyl methacrylate, m-methoxyphenyl methacrylate, p-methoxyphenyl methacrylate, o-methoxyphenylethyl methacrylate, m-methoxyphenylethyl methacrylate, p-methoxyphenylethyl methacrylate and the like; acrylic acid amides such as acrylamide, dimethylaminoethylacrylamide, dimethylaminopropylacrylamide and the like; methacrylic acid amides such as methacrylamide, dimethylaminoethylmethacrylamide, dimethylaminopropylmethacrylamide and the like; cyanoacrylic acid esters; acrolein, cumarone, indene, tetrafluoroethylene, vinyl formal, vinyl formamide and the like, with preference given to ethylene and esters derived from acrylic acid or methacrylic acid such as methyl methacrylate, 2-ethylhexyl acrylate, methyl acrylate, ethyl acrylate, ethyl methacrylate, n-butyl acrylate, isobutyl acrylate, t-butyl acrylate, n-butyl methacrylate, isobutyl methacrylate, t-butyl methacrylate and the like.

In addition, a polymerizable unsaturated monomer of the formula (4): 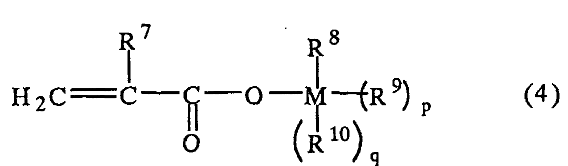 wherein R⁷ is hydrogen atom or alkyl group having 1 to 4 carbon atoms; M is metal atom or silicon atom; when M is metal atom, R⁸, R⁹ and R¹⁰ are the same or different and each is organic acid residue, when M is silicon atom, R⁸, R⁹ and R¹⁰ are the same or different and each is alkyl group having 1 to 18 carbon atoms, aryl group or cycloalkyl group; p and q are both 0 when M is divalent metal atom, p is 1 and q is 0 when M is a trivalent metal atom, and both are 1 when M is quatervalent metal atom, is also mentioned. In the above-mentioned formula (4), (meth)acrylic acid metal salt and silyl (meth)acrylate are preferable, and as M, a metal atom such as zinc, copper and magnesium, and silicon atom are preferable. Examples of the polymerizable unsaturated monomer include the following.

Zinc salts of acrylic acid such as zinc acrylate, zinc acrylate benzoate, zinc acrylate propionate, zinc acrylate octylate, zinc acrylate versatate, zinc acrylate stearate, zinc acrylate isostearate, zinc acrylate palmitate, zinc acrylate cresotinate, zinc acrylate α-naphthoate, zinc acrylate β-naphthoate, zinc acrylate monochloroacetate, zinc acrylate monofluoroacetate, zinc acrylate 2,4-dichlorophenoxyacetate, zinc acrylate 2,4,5-trichlorophenoxyacetate, zinc acrylate quinolinecarboxylate, zinc acrylate nitrobenzoate, zinc acrylate nitronaphthalenecarboxylate, zinc acrylate pyruvate and the like;
zinc salts of methacrylic acid such as zinc methacrylate, zinc methacrylate benzoate, zinc methacrylate propionate, zinc methacrylate octylate, zinc methacrylate versatate, zinc methacrylate stearate, zinc methacrylate isostearate, zinc methacrylate palmitate, zinc methacrylate cresotinate, zinc methacrylate α-naphthoate, zinc methacrylate β-naphthoate, zinc methacrylate monochloroacetate, zinc methacrylate monofluoroacetate, zinc methacrylate 2,4-dichlorophenoxyacetate, zinc methacrylate 2,4,5-trichlorophenoxyacetate, zinc methacrylate quinolinecarboxylate, zinc methacrylate nitrobenzoate, zinc methacrylate nitronaphthalenecarboxylate, zinc methacrylate pyruvate and the like;
copper salts of acrylic acid such as copper acrylate, copper acrylate benzoate, copper acrylate propionate, copper acrylate octylate, copper acrylate versatate, copper acrylate stearate, copper acrylate isostearate, copper acrylate palmitate, copper acrylate cresotinate, copper acrylate α-naphthoate, copper acrylate β-naphthoate, copper acrylate monochloroacetate, copper acrylate monofluoroacetate, copper acrylate 2,4-dichlorophenoxyacetate, copper acrylate 2,4,5-trichlorophenoxyacetate, copper acrylate quinolinecarboxylate, copper acrylate nitrobenzoate, copper acrylate nitronaphthalenecarboxylate, copper acrylate pyruvate and the like;
copper salts of methacrylic acid such as copper methacrylate, copper methacrylate benzoate, copper methacrylate propionate, copper methacrylate octylate, copper methacrylate versatate, copper methacrylate stearate, copper methacrylate isostearate, copper methacrylate palmitate, copper methacrylate cresotinate, copper methacrylate α-naphthoate, copper methacrylate β-naphthoate, copper methacrylate monochloroaceate, copper methacrylate monofluoroacetate, copper methacrylate 2,4-dichlorophenoxyacetate, copper methacrylate 2,4,5-trichlorophenoxyacetate, copper methacrylate quinolinecarboxylate, copper methacrylate nitrobenzoate, copper methacrylate nitronaphthalenecarboxylate, copper methacrylate pyruvate and the like;
magnesium salts of acrylic acid such as magnesium acrylate, magnesium acrylate benzoate, magnesium acrylate propionate, magnesium acrylate octylate, magnesium acrylate versatate, magnesium acrylate stearate, magnesium acrylate isostearate, magnesium acrylate palmitate, magnesium acrylate cresotinate, magnesium acrylate α-naphthoate, magnesium acrylate β-naphthoate, magnesium acrylate monochloroacetate, magnesium acrylate monofluoroacetate, magnesium acrylate 2,4-dichlorophenoxyacetate, magnesium acrylate 2,4,5-trichlorophenoxyacetate, magnesium acrylate quinolinecarboxylate, magnesium acrylate nitrobenzoate, magnesium acrylate nitronaphthalenecarboxylate, magnesium acrylate pyruvate and the like;
magnesium salts of methacrylic acid such as magnesium methacrylate, magnesium methacrylate benzoate, magnesium methacrylate propionate, magnesium methacrylate octylate, magnesium methacrylate versatate, magnesium methacrylate stearate, magnesium methacrylate isostearate, magnesium methacrylate palmitate, magnesium methacrylate cresotinate, magnesium methacrylate α-naphthoate, magnesium methacrylate β-naphthoate, magnesium methacrylate monochloroacetate, magnesium methacrylate monofluoroacetate, magnesium methacrylate 2,4-dichlorophenoxyacetate, magnesium methacrylate 2,4,5-trichlorophenoxyacetate, magnesium methacrylate quinolinecarboxylate, magnesium methacrylate nitrobenzoate, magnesium methacrylate nitronaphthalenecarboxylate, magnesium methacrylate pyruvate and the like;
silyl acrylates such as trimethylsilyl acrylate, triethylsilyl acrylate, tri-n-propylsilyl acrylate, triisopropylsilyl acrylate, tri-n-butylsilyl acrylate, triisobutylsilyl acrylate, triphenylsilyl acrylate, dimethylbutylsilyl acrylate, dimethylhexylsilyl acrylate, dimethyloctylsilyl acrylate, dimethylcyclohexylsilyl acrylate, dimethylphenylsilyl acrylate, dibutylphenylsilyl acrylate, methyldibutylsilyl acrylate, ethyldibutylsilyl acrylate, dibutylcyclohexylsilyl acrylate, dibutylphenylsilyl acrylate and the like;
silyl methacrylates such as trimethylsilyl methacrylate, triethylsilyl methacrylate, tri-n-propylsilyl methacrylate, triisopropylsilyl methacrylate, tri-n-butylsilyl methacrylate, triisobutylsilyl methacrylate, triphenylsilyl methacrylate, dimethylbutylsilyl methacrylate, dimethylhexylsilyl methacrylate, dimethyloctylsilyl methacrylate, dimethylcyclohexylsilyl methacrylate, dimethylphenylsilyl methacrylate, dibutylphenylsilyl methacrylate, methyldibutylsilyl methacrylate, ethyldibutylsilyl methacrylate, dibutylcyclohexylsilyl methacrylate, dibutylphenylsilyl methacrylate and the like.

Of the above-mentioned examples, preferred are zinc salts of (meth)acrylic acid, copper salts of (meth)acrylic acid and magnesium salts of (meth)acrylic acid, particularly preferred are zinc salts of (meth)acrylic acid.

The content of the above-mentioned constituting unit derived from a polymerizable unsaturated monomer other than the triphenylboron-containing constituting unit of the formula (1), (2) or (3) is preferably 0-99 wt%, more preferably 5-95 wt%, in the polymer containing triphenylboron (1), (2) or (3) of the present invention. When the content exceeds 99 wt%, the adhesion-preventive effect against aquatic fouling organisms unpreferably becomes insufficient.

The above-mentioned polymerizable unsaturated monomer is introduced during synthesis of a polymer containing a carboxyl group-containing constituting unit of the formula (5) or a polymer containing a constituting unit derived from a vinylpyridine derivative of the formula (10), or during polymerization of a triphenylboron-containing vinyl monomer of the formula [I']. The above-mentioned polymerizable unsaturated monomer may be used alone or in combination of two or more kinds thereof.

The polymers containing triphenylboron (1)-(3) of the present invention can be prepared into a fouling preventive such as a fishnet antifouling agent, an underwater antifouling coating (e.g., ship bottom antifouling coating) and the like by a conventional method such as the following methods.

### A. Fishnet antifouling agent

The fishnet antifouling agent of the present invention shows low toxicity, is highly safe and shows a superior adhesion-preventive effect against coelenterates (hydrozoas, obelia etc.); shellfish (barnacle, blue mussel, oyster, Serpula etc.); tubicolous polychaetes (*Hydroides norvegica*, *Serpula vermicularis, Pomatoleios kraussii, Dexiospira spirillum* etc.); and other aquatic fouling organisms for a long time.

The fishnet antifouling agent of the present invention is prepared by dispersing or dissolving a polymer containing triphenylboron (1), (2) or (3) in an organic solvent. The content of the polymer containing triphenylboron (1), (2) or (3) in the fishnet antifouling agent of the present invention can be changed according to the environment of application, which is preferably 1-50 wt%, more preferably 3-25 wt%. When the content is less than 1 wt%, the adhesion-preventive effect against aquatic fouling organisms unpreferably becomes insufficient. Conversely, when it exceeds 50 wt%, the fishnet antifouling agent has a higher viscosity, which unpreferably makes its handling difficult.

The organic solvent to be used for the fishnet antifouling agent of the present invention includes organic solvent of aromatic compound, organic solvent of ketone compound, organic solvent of aliphatic compound and the like. Specific examples include xylene, toluene, pseudocumene, diethylbenzene, triethylbenzene, mesitylene, solvent naphtha, butanol, isopropanol, methyl isobutyl ketone, hexane, propylene glycol monomethyl ether and the like. These solvents may be used alone or in combination of two or more kinds thereof.

Where necessary, various resins such as acrylic resin, synthetic rubber, rosin resin, silicone resin, polybutene resin, rubber chloride resin, vinyl chloride resin, alkyd resin, cumarone resin, ethylene-vinyl acetate resin, epoxide resin and the like may be added. These resins may be used alone or in combination of two or more kinds thereof.

When the polymer containing triphenylboron (1), (2) or (3) of the present invention is used as a fishnet antifouling agent, a superior adhesion-preventive effect against aquatic fouling organisms can be achieved even by this polymer alone, but addition of silicone oil, elution regulator, or an antifouling component other than a polymer containing triphenylboron (1), (2) or (3) and the like allows exhibition of a more superior adhesion-preventive effect.

The silicone oil to be used for the fishnet antifouling agent of the present invention is, for example, dimethylsilicone oil, methyl hydrosilicone oil, (higher) fatty acid modified silicone oil, alkyl modified silicone oil, amino modified silicone oil, epoxy modified silicone oil, polyether modified silicone oil, methylphenylsilicone oil and the like, with preference given to polyether modified silicone oil, higher fatty acid modified silicone oil and the like. These may be used alone or in combination of two or more kinds thereof. While the content of these silicone oils can be optionally varied according to the environment of application, it is preferably 0.1-50 wt%, more preferably 0.5-25 wt%, in a fishnet antifouling agent. When the content is less than 0.1 wt%, an effect afforded by concurrent use is not expected, and when it exceeds 50 wt% conversely, it unpreferably degrades property of a coating film.

The antifouling component other than a polymer containing triphenylboron (1), (2) or (3) to be used for the fishnet antifouling agent of the present invention is exemplified by known antifouling components, such as 1,3-dicyanotetrachlorobenzene, 2-(thiocyanomethylthio)benzothiazole, bis(2-pyridylthio-1-oxide)zinc, bis(2-pyridylthio-1-oxide)copper, 2-tert-butylamino-4-cyclopropylamino-6-methylthio-1,3,5-triazine, cuprous oxide, copper thiocyanate (CuSCN), N,N-dimethyldichlorophenyl urea, 4,5-dichloro-2-n-octyl-3-isothiazolone, N-(fluorodichloromethylthio)phthalimide, 2,3,5,6-tetrachloro-4-(methylsulfonyl)pyridine, 2,4,5,6-tetrachloroisophthalonitrile, zinc dimethyldithiocarbamate, bis(dimethyldithiocarbamoyl)zinc ethylene bisdithiocarbamate, pyridine-triphenylboron, triphenylboron-alkyl(3-30 carbon atoms)amine (e.g., triphenylboron-n-octadecylamine, triphenylboron-n-hexadecylamine, triphenylboron-n-octylamine etc.), triphenylboron-rosin amine, copper rhodanide, copper hydroxide, copper naphthenate, manganese ethylene bisdithiocarbamate, zinc ethylene bisdithiocarbamate, N,N'-dimethyl-N'-phenyl-(N-fluorodichloromethylthio)sulfide, 3-iodo-2-propynylbutylcarbamate, diiodomethylparatolylsulfane, 2-(4-thiazolyl)-benzoimidazole and the like, and antifouling compounds of other non-tin group.

There are also mentioned tetraalkyl thiuram disulfides of the formula (11): 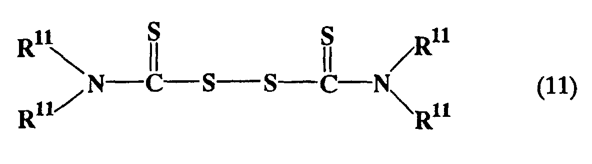 wherein each R¹¹ is the same or different is alkyl group having 1 to 4 carbon atoms. The alkyl group having 1 to 4 carbon atoms at R¹¹ in the formula (11) is exemplified by straight or branched chain alkyl such as methyl, ethyl, n-propyl, isopropyl, butyl and the like, with preference given to ethyl and butyl.

Examples of tetraalkyl thiuram disulfides of the formula (11) include tetramethyl thiuram disulfide, tetraethyl thiuram disulfide, tetraisopropyl thiuram disulfide, tetra-n-butyl thiuram disulfide and the like.

There are also mentioned 2,3-dichloromaleimides of the formula (12): 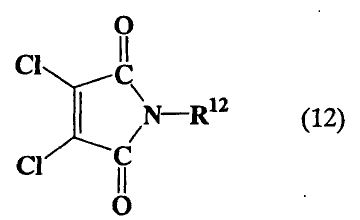 wherein R¹² is hydrogen atom, alkyl group, halogen-substituted alkyl group, cycloalkyl group, phenyl group, alkyl-substituted phenyl group, halogen-substituted phenyl group, benzyl group, alkyl-substituted benzyl group or halogen-substituted benzyl group.

The alkyl group at R¹² of the formula (12) is, for example, straight or branched chain alkyl having 1 to 18 carbon atoms such as methyl, ethyl, isopropyl, n-butyl, t-butyl, octyl, dodecyl, tetradecyl, hexadecyl, octadecyl and the like. The halogen-substituted alkyl group is exemplified by dichloromethyl, dichloroethyl, trichloroethyl and the like. The cycloalkyl group is exemplified by cyclohexyl and the like. The alkyl-substituted phenyl group is exemplified by dimethylphenyl, diethylphenyl, trimethylphenyl, methylethylphenyl and the like. The halogen-substituted phenyl group is exemplified by dichlorophenyl and the like. The alkyl-substituted benzyl group is exemplified by methylbenzyl, dimethylbenzyl, diethylbenzyl, α-methylbenzyl and the like. The halogen-substituted benzyl group is exemplified by chlorobenzyl, dichlorobenzyl and the like. As R¹², ethyl, butyl, diethylphenyl, methylethylphenyl, benzyl are preferable.

Specific examples of 2,3-dichloromaleimides of the formula (12) include 2,3-dichloro-N-ethylmaleimide, 2,3-dichloro-N-isopropylmaleimide, 2,3-dichloro-N-n-butylmaleimide, 2,3-dichloro-N-tert-butylmaleimide, 2,3-dichloro-N-n-octylmaleimide, 2,3-dichloro-N-cyclohexylmaleimide, 2,3-dichloro-N-benzylmaleimide, 2,3-dichloro-N-(2-chlorobenzyl)maleimide, 2,3-dichloro-N-(4-chlorobenzyl)maleimide, 2,3-dichloro-N-(2-methylbenzyl)maleimide, 2,3-dichloro-N-(2,4-dimethylbenzyl)maleimide, 2,3-dichloro-N-(3,4-dimethylbenzyl)maleimide, 2,3-dichloro-N-α-methylbenzylmaleimide, 2,3-dichloro-N-(2,4-dichlorobenzyl)maleimide, 2,3-dichloro-N-(2-ethyl-6-methylphenyl)maleimide, 2,3-dichloro-N-(2,6-dimethylphenyl)maleimide, 2,3-dichloro-N-(2,6-diethylphenyl)maleimide, 2,3-dichloro-N-(2,4-diethylphenyl)maleimide, 2,3-dichloro-N-(2,4,6-trimethylphenyl)maleimide and the like.

There are also mentioned phenols of the formula (13): 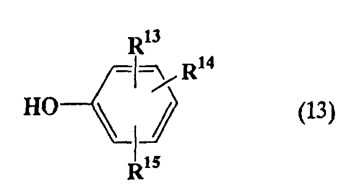 wherein R¹³, R¹⁴ and R¹⁵ are the same or different and each is hydrogen atom, alkyl group, halogen-substituted alkyl group, cycloalkyl group, phenyl group, halogen atom, alkoxy group, carboxyl group, alkenyl group or aralkyl group.

In the formula (13), the alkyl group at R¹³, R¹⁴ and R¹⁵ is exemplified by straight or branched chain alkyl having 1 to 9 carbon atoms, such as methyl, ethyl, n-propyl, isopropyl, n-butyl, t-butyl, nonyl and the like. The halogen-substituted alkyl group is exemplified by dichloromethyl, dichloroethyl, trichloroethyl and the like. The cycloalkyl group is exemplified by cyclohexyl and the like. The halogen atom is exemplified by fluorine atom, chlorine atom, bromine atom and iodine atom. The alkoxy group is exemplified by straight or branched chain alkoxy having 1 to 4 carbon atoms such as methoxy, ethoxy, propoxy and the like. The alkenyl group is exemplified by straight or branched chain alkenyl having 2 to 4 carbon atoms such as vinyl, allyl, isopropenyl and the like. The aralkyl group is exemplified by aralkyl having 7 to 9 carbon atoms such as benzyl, cumyl and the like. As R¹³, R¹⁴ and R¹⁵, hydrogen atom, fluorine atom, chlorine atom, methyl, ethyl, t-butyl, nonyl and vinyl are preferable.

Specific examples of phenols of the formula (13) include nonylphenol, cumylphenol, 4,6-ditert-butyl-m-cresol, 1-cyclohexyl-5-methylphenol, 2,6-ditert-butyl-p-cresol, 2-phenylphenol, 2-butyl-6-ethyl-4-isopropylphenol, cyclohexyl-5-methylphenol, 2-bromo-6-chloro-4-dichloromethylphenol, 2-fluoro-4-iodo-3-trichloroethylphenol, 3-hydroxy-5-methoxybenzoic acid, 4-ethoxy-2-vinylphenol and the like.

Preferred antifouling component mentioned above other than the polymer containing triphenylboron (1), (2) or (3) includes bis(2-pyridylthio-1-oxide)zinc, bis(2-pyridylthio-1-oxide)copper, 2-tert-butylamino-4-cyclopropylamino-6-methylthio-1,3,5-triazine, cuprous oxide, copper thiocyanate (CuSCN), N,N-dimethyldichlorophenyl urea, 4,5-dichloro-2-n-octyl-3-isothiazolone, N-(fluorodichloromethylthio)phthalimide, 2,3,5,6-tetrachloro-4-(methylsulfonyl)pyridine, 2,4,5,6-tetrachloroisophthalonitrile, zinc dimethyldithiocarbamate, bis(dimethyldithiocarbamoyl)zinc ethylene bisdithiocarbamate, pyridine-triphenylboron, triphenylboron-alkyl (3-30 carbon atoms)amine (e.g., triphenylboron-n-octadecylamine, triphenylboron-n-hexadecylamine, triphenylboron-n-octylamine and the like), triphenylboron-rosin amine, copper rhodanide and tetraethyl thiuram disulfide.

The above-mentioned antifouling component other than the polymer containing triphenylboron (1), (2) or (3) may be used alone or in combination of two or more kinds thereof. The weight ratio of the above-mentioned antifouling component other than the polymer containing triphenylboron (1), (2) or (3) to the polymer containing triphenylboron (1), (2) or (3) of the present invention can be optionally changed according to the environment of application, which is preferably 1:50-50:1, more preferably 1:25-25:1, particularly preferably 1:10-10:1. When the content of the above-mentioned antifouling component is greater than the above-mentioned range, the property of a coating film is degraded and when it is smaller conversely, an effect afforded by concurrent use is not expected.

The elution regulator to be used for the fishnet antifouling agent of the present invention is exemplified by dialkyl polysulfides of the formula (14): 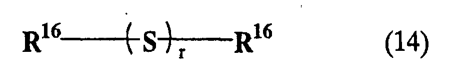 wherein each R¹⁶ is the same or different and is alkyl group having 1 to 20 carbon atoms and r is an integer of 2-10.

In the formula (14), the alkyl group having 1 to 20 carbon atoms at R¹⁶ is preferably exemplified by straight or branched chain alkyl having 2 to 19 carbon atoms, such as ethyl, propyl, t-butyl, t-amyl, t-nonyl, t-dodecyl, nonadecyl and the like and r is preferably 3 to 8.

Specific examples of dialkyl polysulfides of the formula (14) include diethyl pentasulfide, dipropyl tetrasulfide, di-tert-butyl disulfide, di-tert-butyl tetrasulfide, di-tert-amyl tetrasulfide, di-tert-nonyl pentasulfide, di-tert-octyl pentasulfide, di-tert-dodecyl pentasulfide, dinonadecyl tetrasulfide and the like.

In addition, polybutene having an average molecular weight of 200-1,000, paraffins, petrolatum, glycerin, polyhydric alcohols and fatty acid esters can be used as an elution regulator.

Examples of polybutene having an average molecular weight of 200-1,000 include LV-5, LV-10, LV-25, LV-50, LV-100, HV-15, HV-35, HV-50, HV-100, HV-300 manufactured by NIPPON OIL COMPANY, LTD. and the like. Examples of paraffins include liquid paraffin, paraffin wax, paraffin chloride and the like. Examples of petrolatum include white petrolatum, yellow petrolatum and the like.

Preferable examples of the above-mentioned elution regulator include di-tert-nonyl pentasulfide, di-tert-octyl pentasulfide, polybutene, liquid paraffin, white petrolatum and yellow petrolatum.

The above-mentioned elution regulator may be used alone or in combination of two or more thereof. The content of the above-mentioned elution regulator can be optionally changed according to the environment of application, which is preferably 1-30 wt%, more preferably 3-20 wt%, particularly preferably 5-10 wt%, in a fishnet antifouling agent. When the content is less than 1 wt%, an effect afforded by concurrent use is not expected, and conversely, when it exceeds 30 wt%, it unpreferably degrades property of a coating film.

### B. Underwater antifouling coating

The underwater antifouling coating of the present invention shows low toxicity, is highly safe and shows a superior adhesion-preventive effect against coelenterates (hydrozoas, obelia etc.); shellfish (barnacle, blue mussel, oyster, Serpula etc.); tubicolous polychaetes (*Hydroides norvegica, Serpula vermicularis, Pomatoleios kraussii, Dexiospira spirillum* etc.); and other aquatic fouling organisms for a long time.

The underwater antifouling coating of the present invention can be prepared by adding a polymer containing triphenylboron (1), (2) or (3) in water-soluble resin or non-water-soluble resin, and mixing and dispersing them using a paint conditioner, homomixer and the like. In addition, an additive such as other component generally used for coating, solvent (xylene, methyl isobutyl ketone, n-butanol, butyl acetate etc.), pigment (red iron oxide, titanium oxide, zinc oxide etc.), plasticizer, filler (talc, fine silica etc.), curing promoter and the like can be mixed as necessary.

The content of the polymer containing triphenylboron (1), (2) or (3) in the underwater antifouling coating of the present invention can be optionally changed according to the environment of application, which is preferably 1 wt% - 80 wt%, more preferably 3 wt% - 40 wt%. When the content is less than 1 wt%, an adhesion-preventive effect against aquatic fouling organisms becomes insufficient, and conversely, when it exceeds 80 wt%, it increases the viscosity of the coating, which unpreferably makes handling difficult.

When the polymer containing triphenylboron (1), (2) or (3) of the present invention is used as an underwater antifouling agent, a superior adhesion-preventive effect against aquatic fouling organisms can be achieved even by this polymer alone, but addition of silicone oil, elution regulator, an antifouling component other than a polymer containing triphenylboron (1), (2) or (3) and the like allow exhibition of a more superior adhesion-preventive effect. Silicone oil, elution regulator, the antifouling components other than a polymer containing triphenylboron (1), (2) or (3) and the like include those exemplified for fishnet antifouling agent. Where necessary, various resins explained with regard to the fishnet antifouling agent can be also added.

The content of the silicone oil can be optionally changed according to the environment of application, which is preferably 0.1 - 50 wt%, more preferably 0.5 - 25 wt%, in an underwater antifouling coating. When the content is less than 0.1 wt%, an effect afforded by concurrent use is not expected, and conversely, when it exceeds 50 wt%, it unpreferably degrades property of a coating film.

The weight ratio of the antifouling component other than the polymer containing triphenylboron (1), (2) or (3) to the polymer containing triphenylboron (1), (2) or (3) of the present invention can be optionally changed according to the environment of application, which is preferably 1:50 - 50:1, more preferably 1:25 - 25:1, particularly preferably 1:10 - 10:1. When the above-mentioned antifouling component is greater than the above-mentioned range, the property of a coating film is degraded, and conversely, when it is lower, an effect afforded by concurrent use is not expected undesirably.

The content of the elution regulator can be optionally changed according to the environment of application, which is preferably 1 - 30 wt%, more preferably 3 - 20 wt%, particularly preferably 5-10 wt%, in an underwater antifouling coating. When the content is less than 1 wt%, an effect afforded by concurrent use is not expected, and conversely, when it exceeds 30 wt%, it unpreferably degrades property of a coating film.

### Examples

The present invention is explained in detail in the following by way of Examples and Comparative Examples. It is needless to say that the present invention is not limited by these Examples. In the Examples, the contents are in wt%. In the Tables, triphenylboron is abbreviated as TPB.

### Example 1 <synthesis of triphenylboron adduct>

Into a four neck 1 L flask equipped with a mechanical stirrer, a condenser, a dropping funnel and a thermometer was placed an aqueous solution of sodium hydroxide adduct of triphenylboron (250.3 g, 9% aqueous solution, manufactured by Tokyo Kasei Co., Ltd.) and stirring was started. Ethylene diamine (4.81 g, manufactured by Tosoh Corporation) was dropwise added at room temperature from the dropping funnel. After the dropwise addition, the mixture was stirred at the same temperature for 5 hr. The precipitate was collected by filtration and washed with water and dried to give white powdery substance (21.64 g). The obtained compound was subjected to elemental analysis and IR (infrared) spectrum analysis. As a result, the compound was confirmed to be a triphenylboron-ethylenediamine adduct (triphenylboron adduct A) of the objective substance, m.p. 157.8-159.8°C.

### Examples 2-4 <synthesis of triphenylboron adduct>

By synthesizing in the same manner as in Example 1 using the starting materials shown in Table 1, triphenylboron adducts B-D were obtained. They are shown in Table 1 together with triphenylboron adduct A. In Table 1, each figure is in g (gram).

**Table 1**

| triphenylboron adduct | | | | | |
|---|---|---|---|---|---|
| (unit:g) | | | | | |
| | | Example | | | |
| | | 1 | 2 | 3 | 4 |
| amine | Ethylenediamine | 4.81 | | | |
| | Propylenediamine | | 5.93 | | |
| | p-phenylenediamine | | | 8.65 | |
| | 4-aminopyridine | | | | 7.53 |
| TPB·NaOH adduct *1 | | 250.3 | 250.3 | 250.3 | 250.3 |
| Yield | | 21.64 | 21.38 | 24.21 | 24.28 |
| Adduct reference | | A | B | C | D |

| | | | | | |
|---|---|---|---|---|---|
| *1: sodium hydroxide adduct of triphenylboron, 9% aqueous solution | | | | | |

### Example 5 <synthesis of polymers containing triphenylboron (1)>

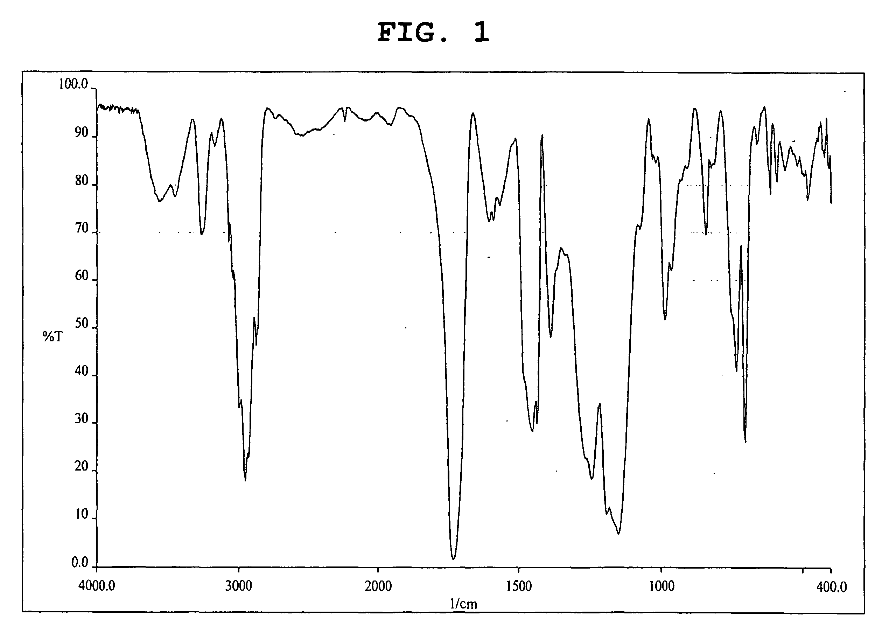

Into a four neck 300 mL flask equipped with a mechanical stirrer, a condenser, a dropping funnel and a thermometer was placed a solution (100 g) of methacrylic acid/methyl methacrylate/2-ethylhexyl acrylate copolymer (resin 1, Mw=ca 10,000, acid value 18.6 mg KOH/g) in 40% xylene/n-BuOH, and stirring was initiated. The triphenylboron-ethylenediamine adduct (triphenylboron adduct A, 10.1 g) synthesized in Example 1 was cast in at room temperature and then xylene (16.1 g) was added. The mixture was stirred at the same temperature for 5 hr to give a solution (polymer solution A, 126 g) of a polymer containing triphenylboron in xylene. The solvent was evaporated under reduced pressure from a part of the xylene solution and the residue was dried to give a pale-yellow white resin like substance. By IR (infrared) spectrum analysis, it was confirmed to be the objective substance. The weight average molecular weight was about 13,000 (GPC). The IR (infrared) spectrum of this polymer is shown in Fig. 1.

### Examples 6-15 <synthesis of polymers containing triphenylboron (1) and (2)>

In the same manner as in Example 5 using a triphenylboron adduct, a carboxyl group-containing polymer and a solvent shown in Table 2, solutions of polymer containing a triphenylboron (polymer solutions B-K) were synthesized. They are collectively shown in Table 2 together with the polymer solution A. Unless particularly indicated, each figure in Table 2 is in g (gram).

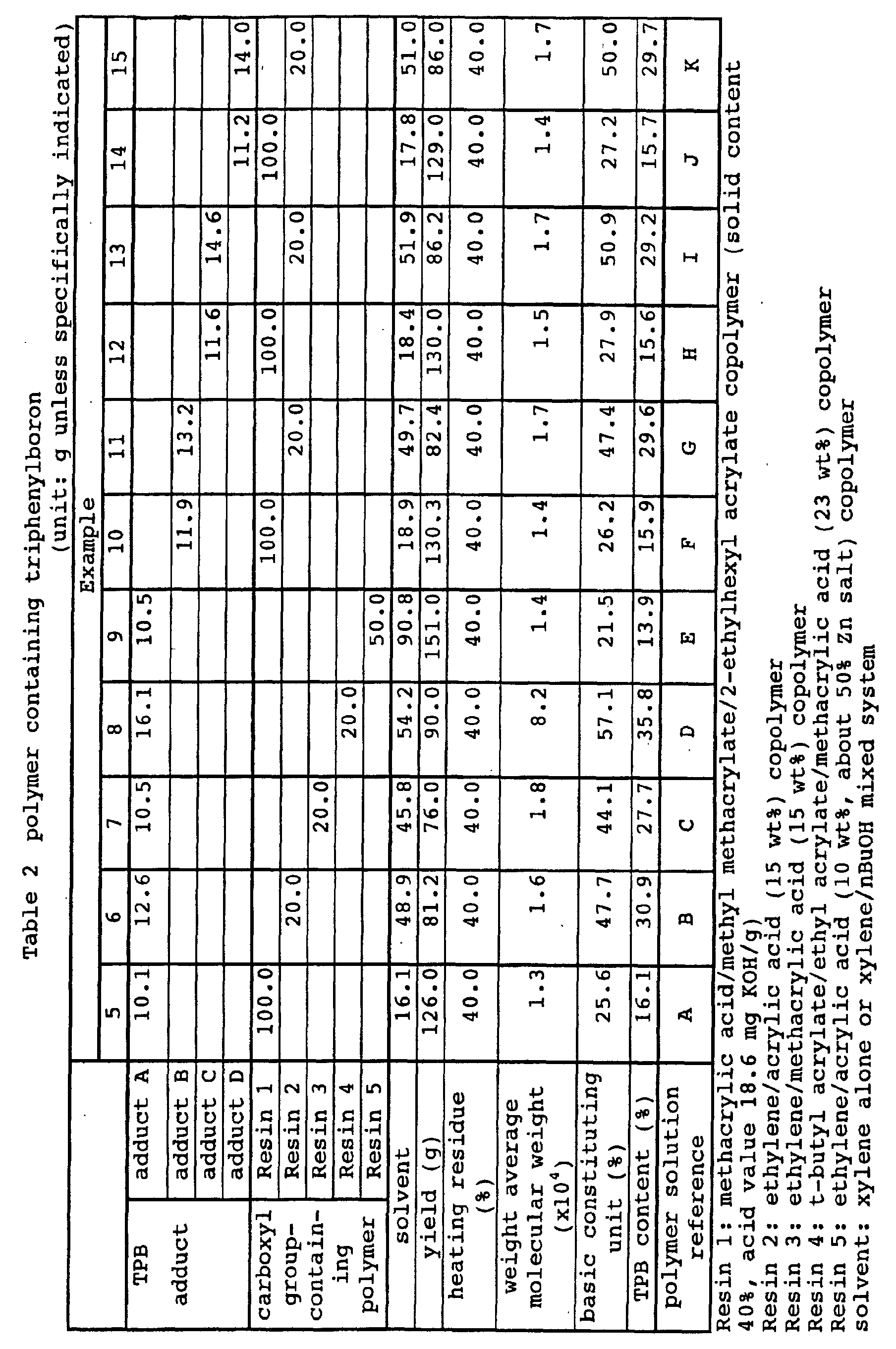

### Examples 16-29 and Comparative Examples 1-3 <Formulation Examples of fishnet antifouling agents>

The fishnet antifouling agents of the present invention (Examples 16-29) were prepared in the compositions shown in Table 3 using the polymer solutions A-K obtained in Examples 5-15. In the same manner, fishnet antifouling agents of Comparative Examples 1-3 were prepared. Each figure in Table 3 is in wt%.

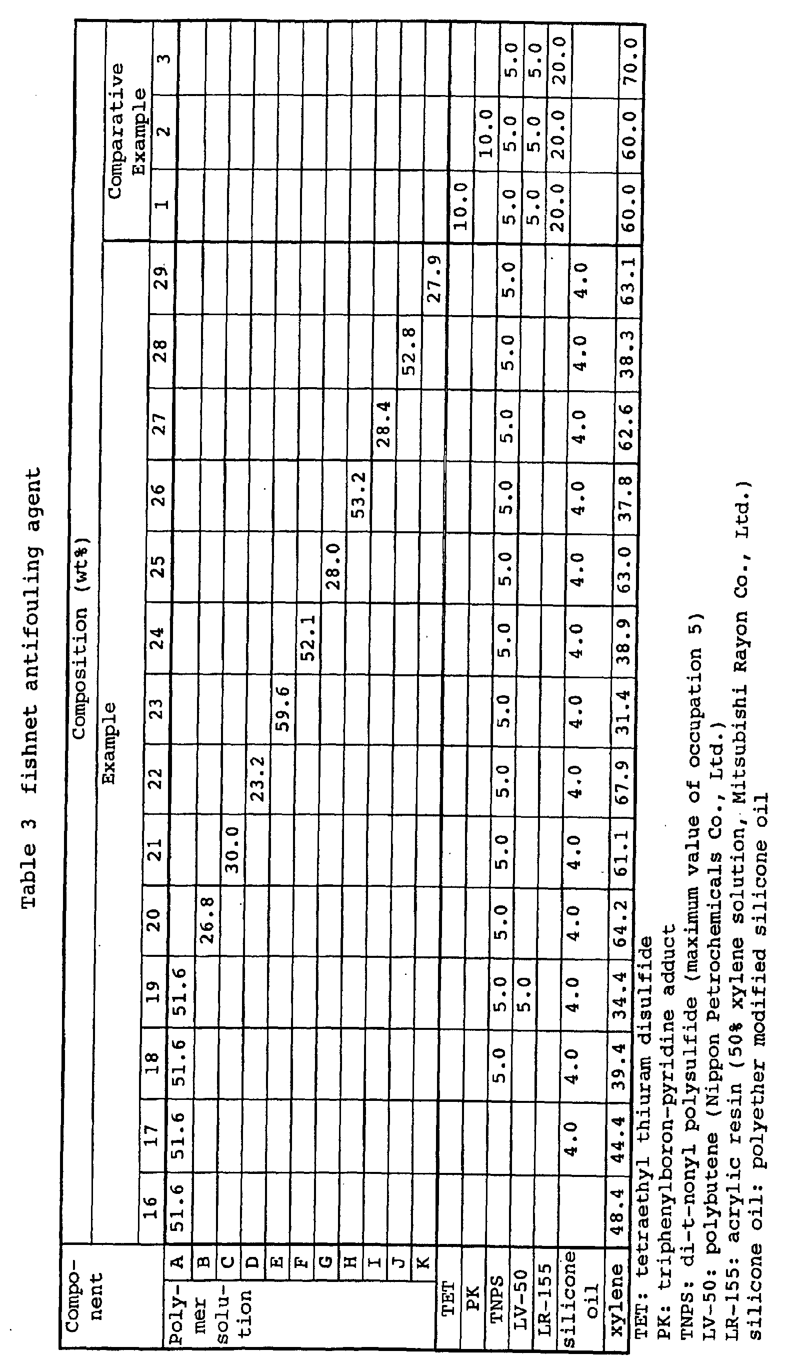

### Examples 30-44 and Comparative Examples 4-7 <Formulation Examples of ship bottom antifouling coatings>

The ship bottom antifouling coating of the present invention (Examples 30-44) were prepared in the compositions shown in Table 4 using the polymer solutions A-K obtained in Examples 5-15. In the same manner, ship bottom antifouling coatings of Comparative Examples 4-7 were prepared. Each figure in Table 4 is in wt%.

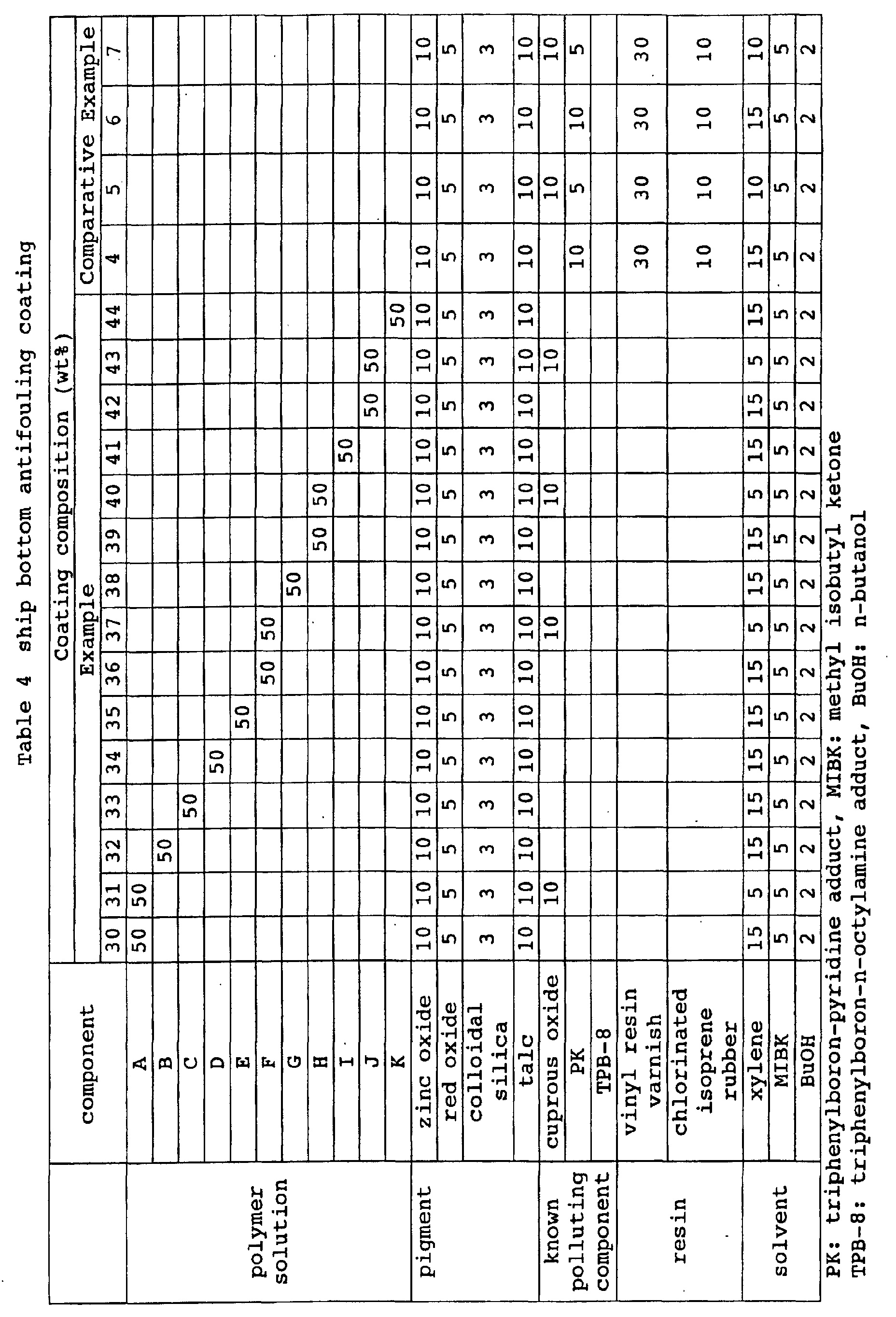

### Experimental Example 1 <fishnet antifouling agent effect test>

The fishnet antifouling agents of Examples 16-29 and Comparative Examples 1-3 were respectively applied to polyethylene unknotted nets (6 knot, 400 denier/60 yarns) by immersion, air-dried and set on a metal frame. The test nets were retained at about 1.5 meters underwater in the sea off Shukumo-shi, Kochi-ken and the degree of fouling due to adhesion of aquatic fouling organisms was observed. The degree of fouling was evaluated according to the following criteria, the results of which are shown in Table 5.

**Table 5**

| fishnet antifouling agent effect test results | | | | | | | |
|---|---|---|---|---|---|---|---|
| | | 1 month | 2 month | 3 month | 4 month | 5 month | 6 month |
| Example | 16 | A | A | A | A | B | B |
| | 17 | A | A | A | A | A | A |
| | 18 | A | A | A | A | A | A |
| | 19 | A | A | A | A | A | A |
| | 20 | A | A | A | A | A | A |
| | 21 | A | A | A | A | A | A |
| | 22 | A | A | A | A | A | A |
| | 23 | A | A | A | A | A | A |
| | 24 | A | A | A | A | A | A |
| | 25 | A | A | A | A | A | A |
| | 26 | A | A | A | A | A | A |
| | 27 | A | A | A | A | A | A |
| | 28 | A | A | A | A | A | A |
| | 29 | A | A | A | A | A | A |
| Comparative Example | 1 | C | D | | | | |
| | 2 | A | A | A | B | C | D |
| | 3 | D | | | | | |
| untreated | | D | | | | | |
| untreated: polyethylene unknotted net not treated with fishnet antifouling agent | | | | | | | |

### Evaluation criteria of degree of fouling of net

- Evaluation A:: Area of fouling of fishnet, 0%, no adhesion of aquatic fouling organisms.
- Evaluation B:: Area of fouling of fishnet, over 0% to less than 10%, small amount of adhesion of aquatic fouling organisms to the extent practically acceptable.
- Evaluation C:: Area of fouling of fishnet, 10% to less than 50%, great amount of adhesion of aquatic fouling organisms, unpractical as a fishnet.
- Evaluation D:: Area of fouling of fishnet, 50% or more, markedly greater amount of adhesion of aquatic fouling organisms.

A number of aquatic fouling organisms such as barnacle and *Hydroides norvegica* adhered to the nets of Comparative Examples 1-3 and untreated nets in 1 to 4 months. On the other hand, shellfish, tubicolous polychaetes or other aquatic fouling organisms did not adhere at all to the nets of Examples 16-29 retained underwater for at least 4 months.

### Experimental Example 2 <ship bottom antifouling coating effect test>

The ship bottom antifouling coatings of Examples 30-44 and Comparative Examples 4-7 were applied on both sides of 50×100×2 mm hard vinyl chloride plates to achieve a dry film thickness of about 100 micron. After air-drying for one day, these test plates were retained at about 1.5 meters underwater in the sea off Shukumo-shi, Kochi-ken and the degree of fouling of the test plates due to adhesion of aquatic organisms was observed. The degree of fouling was evaluated according to the following criteria, the results of which are shown in Table 6.

**Table 6**

| ship bottom antifouling coating effect test results | | | | | | | |
|---|---|---|---|---|---|---|---|
| | | 1 month | 2 month | 3 month | 4 month | 5 month | 6 month |
| Example | 30 | A | A | A | A | A | A |
| | 31 | A | A | A | A | A | A |
| | 32 | A | A | A | A | A | A |
| | 33 | A | A | A | A | A | A |
| | 34 | A | A | A | A | A | A |
| | 35 | A | A | A | A | A | A |
| | 36 | A | A | A | A | A | A |
| | 37 | A | A | A | A | A | A |
| | 38 | A | A | A | A | A | A |
| | 39 | A | A | A | A | A | A |
| | 40 | A | A | A | A | A | A |
| | 41 | A | A | A | A | A | A |
| | 42 | A | A | A | A | A | A |
| | 43 | A | A | A | A | A | A |
| | 44 | A | A | A | A | A | A |
| Comparative Example | 4 | A | A | A | B | B | C |
| | 5 | A | B | C | C | D | |
| | 6 | A | B | B | C | D | |
| | 7 | A | B | C | D | | |
| untreated | | D | | | | | |
| untreated: hard vinyl chloride plates not treated with ship bottom antifouling coating | | | | | | | |

### Evaluation criteria of degree of fouling of test plate

- Evaluation A:: Area of fouling of test plate, 0%, no adhesion of aquatic fouling organisms.
- Evaluation B:: Area of fouling of test plate, over 0% to less than 10%, small amount of adhesion of aquatic fouling organisms to the extent practically acceptable.
- Evaluation C:: Area of fouling of test plate, 10% to less than 50%, great amount of adhesion of aquatic fouling organisms, impractical as a ship bottom antifouling coating.
- Evaluation D:: Area of fouling of test plate, 50% or more, markedly greater amount of adhesion of aquatic fouling organisms.

A number of aquatic fouling organisms such as barnacle and *Hydroides norvegica* adhered to the plates of Comparative Examples 4-7 and untreated plates in 1 to 4 months. On the other hand, shellfish, tubicolous polychaetes or other aquatic fouling organisms did not adhere at all to the plates of Examples 30-44 retained underwater for 6 months.

### Example 45 <synthesis of polymer containing triphenylboron (3)>

Into a four neck 300 mL flask equipped with a mechanical stirrer, a condenser, a dropping funnel and a thermometer was placed poly(4-vinylpyridine) (5.3 g, reagent of Aldrich, molecular weight about 60,000) dissolved in methanol (50 g) and stirring was started. The temperature of the system was raised to 50°C, an aqueous solution (157,g, reagent of Tokyo Kasei Co., Ltd.; 9% aqueous solution) of sodium hydroxide adduct of triphenylboron was added dropwise from the dropping funnel over about 1 hr. After the completion of the dropwise addition, the mixture was stirred at the same temperature for 1 hr. The solvent was evaporated under reduced pressure and water was added. The precipitated viscous insoluble material was collected by filtration, washed with water and dried to give 14 g of a pale-yellowish white polymer substance (polymer A).

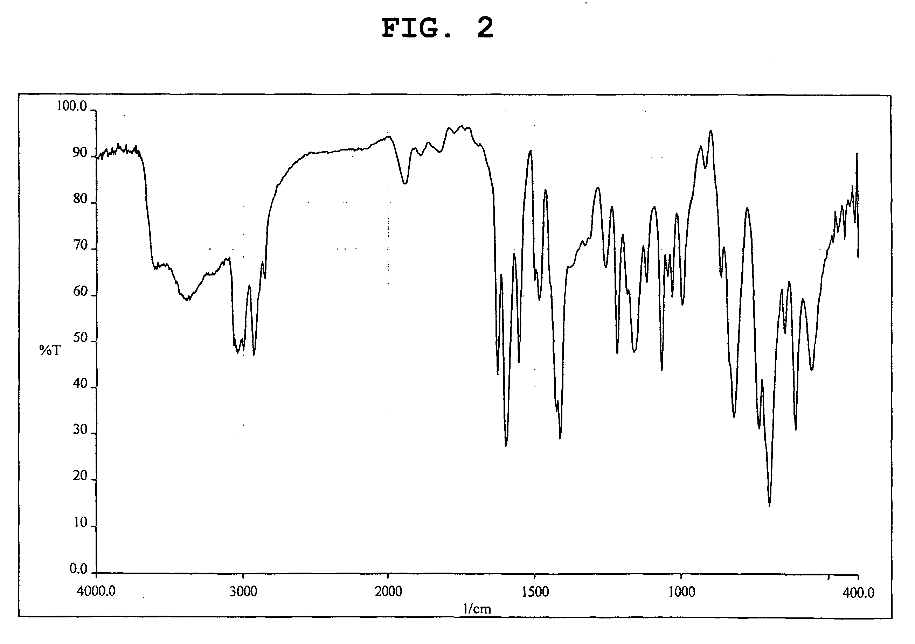

The obtained compound was subjected to IR (infrared) spectrum analysis. As a result, the compound was confirmed to be the objective substance. The IR (infrared) spectrum thereof is shown in Fig. 2. In addition, the weight average molecular weight was measured by gel permeation chromatography (GPC) and found to be about 198,000. The content of triphenylboron-containing constituting unit of the formula (3) and the content of triphenylboron in polymer A were 85 wt% and 59 wt%, respectively.

### Example 46 <synthesis of polymer containing triphenylboron (3)>

Into a four neck 300 mL flask equipped with a mechanical stirrer, a condenser, a dropping funnel and a thermometer was placed 4-vinylpyridine-butyl methacrylate copolymer (5.3 g, reagent of Aldrich, butyl methacrylate content 10 wt%) dissolved in methanol (50 g) and stirring was started. The temperature of the system was raised to 50°C, an aqueous solution (142,g, reagent of Tokyo Kasei Co., Ltd.; 9% aqueous solution) of sodium hydroxide adduct of triphenylboron was added dropwise from the dropping funnel over about 1 hr. After the completion of the dropwise addition, the mixture was stirred at the same temperature for 1 hr. The solvent was evaporated under reduced pressure and water was added. The precipitated viscous insoluble material was collected by filtration, washed with water and dried to give 12.3 g of a pale-yellowish white polymer substance (polymer B). The content of triphenylboron-containing constituting unit of the formula (3) and the content of triphenylboron in polymer B were 78 wt% and 54 wt%, respectively.

### Example 47 <synthesis of polymer containing triphenylboron (3)>

Into a four neck 300 mL flask equipped with a mechanical stirrer, a condenser, a dropping funnel and a thermometer was placed a 49 wt% xylene solution (28.3 g) of 4-vinylpyridine-butyl methacrylate copolymer (4-vinylpyridine content 10 wt%) and stirring was started. The temperature of the system was raised to 50°C, and an aqueous solution (37.0 g, reagent of Tokyo Kasei Co., Ltd.; 9% aqueous solution) of sodium hydroxide adduct of triphenylboron was added dropwise from the dropping funnel over about 30 min. After the completion of the dropwise addition, the mixture was stirred at the same temperature for 2 hr. The reaction mixture was transferred to a partition funnel and left standing. The aqueous layer was partitioned and water was added to the xylene layer and washed. Washing was repeated until the partitioned aqueous layer did not show alkalinity, and the solvent was evaporated under reduced pressure to give 15.5 g of a yellow-brown resin-like substance (polymer C). The weight average molecular weight was measured by gel permeation chromatography (GPC) and found to be about 140,000. The content of the triphenylboron-containing constituting unit of the formula (3) and the content of triphenylboron in polymer C were 14.3 wt% and 10.0 wt%, respectively.

### Example 48 <synthesis of polymer containing triphenylboron (3)>

Into a four neck 300 mL flask equipped with a mechanical stirrer, a condenser, a dropping funnel and a thermometer was placed a 45 wt% xylene solution (46.7 g) of 4-vinylpyridine-zinc methacrylate copolymer (4-vinylpyridine content 5 wt%) and stirring was started. The temperature of the system was raised to 50°C, and triphenylboron (2.5 g, reagent of Aldrich) was added by small portions. After the completion of the addition, the mixture was stirred at the same temperature for 2 hr. The solvent was evaporated under reduced pressure to give 21.0 g of a yellow-brown resin-like substance (polymer D). The weight average molecular weight was measured by gel permeation chromatography (GPC) and found to be about 3,000. The content of the triphenylboron-containing constituting unit of the formula (3) and the content of triphenylboron in polymer D were 11.8 wt% and 8.2 wt%, respectively.

### Examples 49-52 and Comparative Examples 8-9 <Formulation Example of fishnet antifouling agent>

The fishnet antifouling agents of the present invention (Examples 49-52) were prepared in the compositions shown in Table 7 using the polymers A-D obtained in Examples 45-48. In the same manner, fishnet antifouling agents of Comparative Examples 8-9 were prepared. Each figure in Table 7 is in wt%. The polybutene used was LV-50 (manufactured by Nippon Petrochemicals Co., Ltd.), and the acrylic resin (50% xylene solution) was LR-155 (manufactured by Mitsubishi Rayon Co., Ltd.).

**Table 7**

| fishnet antifouling agent | | | | | | |
|---|---|---|---|---|---|---|
| (unit: wt%) | | | | | | |
| component | Example 49 | Example 50 | Example 51 | Example 52 | Comparative Example 8 | Comparative Example 9 |
| polymer A | 10 | | | | | |
| polymer B | | 10 | | | | |
| polymer C | | | 30 | | | |
| polymer D | | | | 30 | | |
| acrylic resin (50% xylene solution) | 20 | 20 | | | 20 | 20 |
| xylene | 70 | 70 | 70 | 70 | 60 | 60 |
| pyridinetriphenylboron | | | | | | 10 |
| tetraethylthiuram disulfide | | | | | 10 | |
| polybutene | | | | | 5 | 5 |
| yellow petrolatum | | | | | 5 | 5 |

### Experimental Example 3 <fishnet antifouling agent effect test>

The fishnet antifouling agents of Examples 49-52 and Comparative Examples 8-9 were respectively applied to polyethylene unknotted nets (6 knots, 400 denier/60 yarns) by immersion, air-dried and retained at about 1.5 meters underwater in the sea off Shukumo-shi, Kochi-ken, for 6 months from April 1998. The nets were pulled out every month and the degree of fouling was evaluated for 6 months according to the following criteria, the results of which are shown in Table 8.

### Evaluation criteria of degree of fouling of net

- Evaluation A:: Area of fouling of fishnet, 0%, no adhesion of aquatic fouling organisms.
- Evaluation B:: Area of fouling of fishnet, over 0% to less than 10%, small amount of adhesion of aquatic fouling organisms to the extent practically acceptable.
- Evaluation C:: Area of fouling of fishnet, 10% to less than 50%, great amount of adhesion of aquatic fouling organisms, often unusable as a fishnet.
- Evaluation D:: Area of fouling of fishnet, 50% or more, markedly greater amount of adhesion of aquatic fouling organisms, unusable as fishnet.

**Table 8**

| fishnet antifouling agent effect test results | | | | | | |
|---|---|---|---|---|---|---|
| | 1 month | 2 month | 3 month | 4 month | 5 month | 6 month |
| Example 49 | A | A | A | A | B | B |
| Example 50 | A | A | A | A | B | B |
| Example 51 | A | A | A | A | B | B |
| Example 52 | A | A | A | A | A | A |
| Comparative Example 8 | C | D | | | | |
| Comparative Example 9 | A | A | A | B | C | C |
| untreated net | D | | | | | |
| untreated net: polyethylene unknotted net not treated with fishnet antifouling agent | | | | | | |

A number of aquatic fouling organisms such as barnacle and *Hydroides norvegica* adhered to the nets of Comparative Example 8 and untreated nets in 1 to 2 months. while adhesion of aquatic fouling organisms to the net of Comparative Example 9 was not found in 3 months, they started to adhere in 4 months. In contrast, shellfish, tubicolous polychaetes or other aquatic fouling organisms did not adhere at all to the nets of Examples 49-52 retained underwater for 4 months.

### Examples 53-64 and Comparative Examples 10-15 <Formulation Example of underwater antifouling coating>

The underwater antifouling coating (Examples 53-64 and Comparative Examples 10-15) were prepared in the compositions shown in Table 9 by mixing each component.

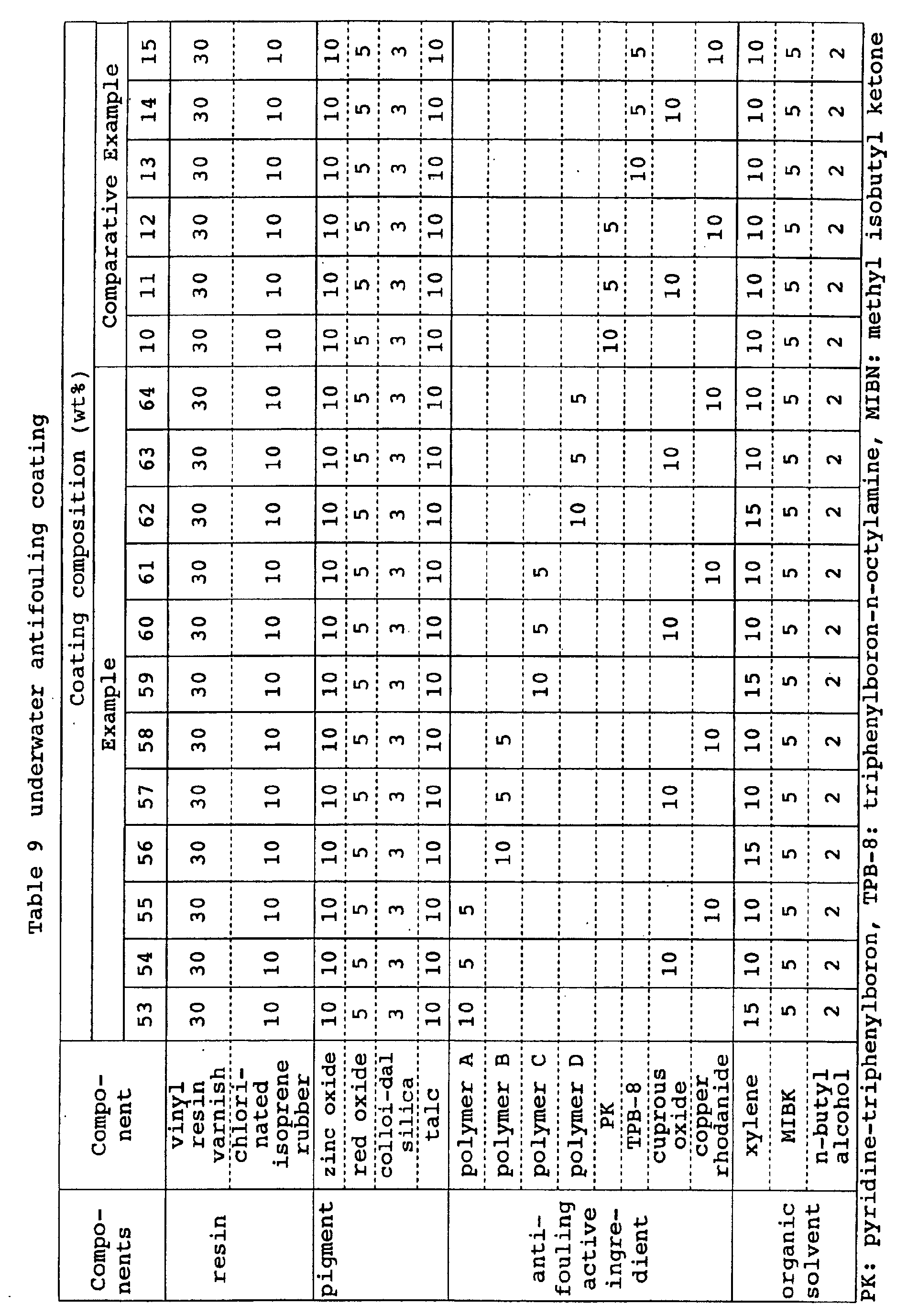

### Experimental Example 4 <underwater antifouling coating effect test>

A typical anticorrosive coating was applied to sandblasted steel plates in advance, and the coatings of Examples 53-64 and Comparative Examples 10-15 were applied twice with a brush on the dry film to prepare test plates (100 mm × 300 mm) having an underwater antifouling coating having a dry coating film thickness of about 100 µm. These test plates were retained at about 1.5 meters underwater in the Shukumo gulf, Shukumo-shi, Kochi-ken, for 12 months, and the degree of adhesion of aquatic fouling organisms was observed every 3 months during this period. The degree of adhesion of the aquatic fouling organisms was evaluated according to the following criteria, the results of which are shown in Table 10.

### Evaluation criteria of degree of adhesion of aquatic fouling organisms

No adhesion of aquatic fouling organisms ⓞ
Area of adhesion of aquatic fouling organisms less than 10% ○
Area of adhesion of aquatic fouling organisms 10% - less than 20% Δ
Area of adhesion of aquatic fouling organisms 20% - less than 30% ×
Area of adhesion of aquatic fouling organisms 30% or above × ×

**Table 10**

| underwater antifouling coating effect test results | | | | |
|---|---|---|---|---|
| adhesion-preventive effect | | | | |
| | 3 month | 6 month | 9 month | 12 month |
| Example 53 | ⓞ | ⓞ | ⓞ | ⓞ |
| Example 54 | ⓞ | ⓞ | ⓞ | ⓞ |
| Example 55 | ⓞ | ⓞ | ⓞ | ⓞ |
| Example 56 | ⓞ | ⓞ | ⓞ | ⓞ |
| Example 57 | ⓞ | ⓞ | ⓞ | ⓞ |
| Example 58 | ⓞ | ⓞ | ⓞ | ⓞ |
| Example 59 | ⓞ | ⓞ | ⓞ | ⓞ |
| Example 60 | ⓞ | ⓞ | ⓞ | ⓞ |
| Example 61 | ⓞ | ⓞ | ⓞ | ⓞ |
| Example 62 | ⓞ | ⓞ | ⓞ | ⓞ |
| Example 63 | ⓞ | ⓞ | ⓞ | ⓞ |
| Example 64 | ⓞ | ⓞ | ⓞ | ⓞ |
| Comparative Example 10 | ⓞ | ⓞ | ○ | ○ |
| Comparative Example 11 | Δ | × | ×× | ×× |
| Comparative Example 12 | Δ | × | ×× | ×× |
| Comparative Example 13 | ⓞ | ⓞ | ○ | ○ |
| Comparative Example 14 | Δ | × | ×× | ×× |
| Comparative Example 15 | Δ | × | ×× | ×× |

As is evident from Table 10, the test plates coated with the coatings of Comparative Examples 10-15 showed a decreased adhesion-preventive effect in 3-9 months of immersion. In contrast, the test plates coated with the coatings of Examples 53-64 did not show adhesion of aquatic fouling organisms even after 12 months of immersion in sea.

### Example 65 <synthesis of triphenylboron-containing vinyl monomer>

Into a four neck 500 mL flask equipped with a mechanical stirrer, a condenser, a dropping funnel and a thermometer was placed an aqueous solution (370 g, 9% aqueous solution, reagent of Tokyo Kasei Co., Ltd.) of sodium hydroxide adduct of triphenylboron and stirring was started at room temperature. Thereto was dropwise added 4-vinylpyridine (10.5 g, Koei Chemical co., Ltd.) over about 30 minutes. After the dropwise addition, the mixture was stirred at the same temperature for 2 hr. The precipitate white insoluble material was collected by filtration, washed with water and dried to give a white powder (34.9 g). The obtained compound was subjected to IR (infrared) spectrum analysis. As a result, the compound was confirmed to be a 4-vinylpyridine-triphenylboron adduct.

### Example 66 <synthesis of polymer containing triphenylboron (3)>

Into a four neck 500 mL flask equipped with a mechanical stirrer, a condenser, a dropping funnel and a thermometer were placed a triphenylboron-containing vinyl monomer (10 g) synthesized in Example 65, butyl methacrylate (90 g), xylene (100 g) and azobisisobutyronitrile (0.2 g), and the mixture was polymerized for 2 hr under a nitrogen atmosphere while maintaining the temperature at 80-90°C. Azobisisobutyronitrile (0.2 g) was further added at the same temperature and the mixture was polymerized for 2 more hours to give a polymer solution having a heating residue of 50.1%. The weight average molecular weight was measured by gel permeation chromatography (GPC) and found to be about 20,000. The content of the triphenylboron-containing constituting unit of the formula (3) and the content of triphenylboron in the obtained polymer were 9.7 wt% and 6.9 wt%, respectively.

### Industrial Applicability

As is evident from the foregoing explanation, the polymer containing triphenylboron (1), (2) or (3) of the present invention shows extremely small adhesion of coelenterates (hydrozoas, obelia etc.); shellfish (barnacle, blue mussel, oyster, Serpula etc.); tubicolous polychaetes (*Hydroides norvegica*, *Serpula vermicularis, Pomatoleios* *kraussii, Dexiospira spirillum* etc.); and other aquatic fouling organisms and shows a superior adhesion-preventive effect for a long time. Because it has a function of not only an active ingredient but also a binder, the polymer characteristically shows fine miscibility with other coating resins and a less adverse influence on the environment. Therefore, a fouling preventive containing this polymer, such as a fishnet antifouling agent and an underwater antifouling coating (e.g., a ship bottom antifouling coating etc.), becomes extremely useful.

This application is based on patent application Nos. 1999-206799, 2000-76939 and 2000-80153 filed in Japan, the contents of which are hereby incorporated by reference.

## Claims

1. A polymer comprising a triphenylboron-containing constituting unit of the formula [I]: 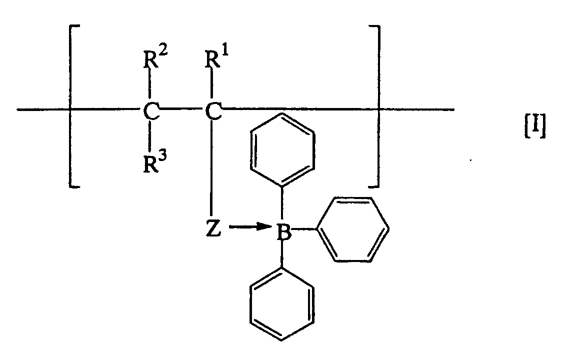 wherein R¹, R² and R³ are the same or different and each is hydrogen atom or alkyl group having 1 to 4 carbon atoms;
Z is a group of the formula (1a): 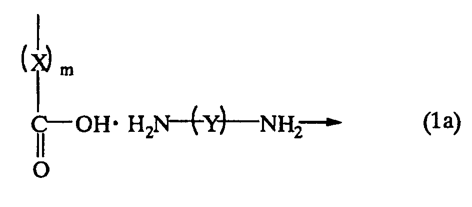 , the formula (2a): 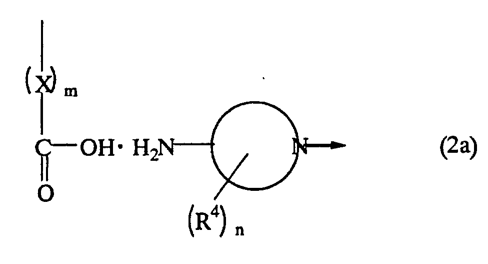 or the formula (3a): 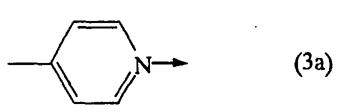 wherein, in the formulas (1a) and (2a), X is alkylene group having 1 to 18 carbon atoms, arylene group, aralkylene group, -C(=O)- group, -C(=O)-R⁵- group, -C(=O)-O-R⁵- group, -O-R⁵-group, -C(=O)-O-R⁵-O-C(=O)- group or -C(=O)-O-R⁵-O-C(=O)-R⁶-group (where R⁵ and R⁶ are the same or different and each is alkylene group having 1 to 18 carbon atoms or arylene group); Y is alkylene group having 2 to 18 carbon atoms, arylene group, aralkylene group or cycloalkylene group; m is 0 or 1; R⁴ in the number of n are the same or different and each is halogen atom or alkyl group having 1 to 18 carbon atoms; n is an integer of 0-3; and a group of the formula (2b): 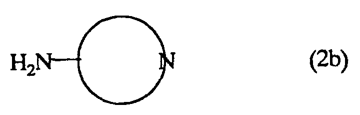 is amino-substituted, N-containing heterocycle.

2. The polymer of claim 1, wherein the weight average molecular weight is 1,000-1,000,000.

3. The polymer of claim 1, which further comprises a constituting unit derived from a polymerizable unsaturated monomer other than a constituting unit of the formula [I].

4. The polymer of claim 3, wherein the polymerizable unsaturated monomer has the formula (4): 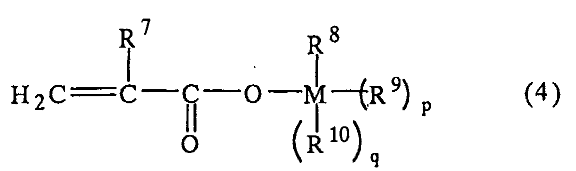 wherein R⁷ is hydrogen atom or alkyl group having 1 to 4 carbon atoms; M is metal atom or silicon atom; when M is metal atom, R⁸, R⁹ and R¹⁰ are the same or different and each is organic acid residue, when M is silicon atom, R⁸, R⁹ and R¹⁰ are the same or different and each is alkyl group having 1 to 18 carbon atoms, aryl group or cycloalkyl group; when M is divalent metal atom, p and q are both 0, when M is trivalent metal atom, p is 1 and q is 0, and when M is quatervalent metal atom, both are 1.

5. The polymer of claim 4, wherein, in the formula [I], when Z is a group of the formula (3a), R⁷ is hydrogen atom or methyl group, and M is metal atom.

6. The polymer of claim 4 or 5, wherein the metal atom is zinc, copper or magnesium.

7. A composition comprising the polymer of any of claims 1-6.

8. The composition of claim 7, further comprising at least one member selected from the group consisting of silicone oil, an elution regulator and an antifouling component other than the polymer of claim 1.

9. A fouling preventive comprising the polymer of any of claims 1-6.

10. The fouling preventive of claim 9, which further comprises at least one member selected from the group consisting of silicone oil, an elution regulator and an antifouling component other than the polymer of claim 1.

11. The fouling preventive of claim 9 or 10, which is for preventing fouling of a fishnet.

12. The fouling preventive of claim 9 or 10, which is for an underwater antifouling coating.
